(19) Europäisches Patentamt
European Patent Office
Office européen des brevets

(11) EP 3 940 696 B1

(12) EUROPEAN PATENT SPECIFICATION

(45) Date of publication and mention
of the grant of the patent:
03.09.2025 Bulletin 2025/36

(51) International Patent Classification (IPC):
G10L 19/005 (2013.01)    G06T 5/00 (2024.01)
G06V 10/77 (2022.01)    G10L 21/0316 (2013.01)
G06T 5/77 (2024.01)

(21) Application number: 21185492.2

(22) Date of filing: 14.07.2021

(52) Cooperative Patent Classification (CPC):
G10L 19/005; G06T 5/77; G06V 10/7715;
G10L 21/0316; G06V 10/449

(54) **INPAINTING BASED SIGNAL GAP RECONSTRUCTION WITH SPARSE REPRESENTATION**

INPAINTING BASIERTE SIGNALLÜCKENREKONSTRUKTION MIT EINER SPÄRLICHEN DARSTELLUNUG

RECONSTRUCTION BASÉE SUR LA RETOUCHE D'UN SIGNAL MANQUANT À L'AIDE D'UNE REPRÉSENTATION PARCIMONIEUSE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 15.07.2020 EP 20186016

(43) Date of publication of application:
19.01.2022 Bulletin 2022/03

(73) Proprietor: Österreichische Akademie der
Wissenschaften
1010 Wien (AT)

(72) Inventors:
• Tauböck, Georg
  1060 Vienna (AT)
• Rajbamshi, Shristi
  1200 Vienna (AT)
• Balazs, Peter
  3430 Tulln (AT)

(74) Representative: Patentanwaltskanzlei
Matschnig & Forsthuber OG
Biberstraße 22
Postfach 36
1010 Wien (AT)

(56) References cited:
WO-A2-2006/106508

• AMIR ADLER ET AL: "Audio Inpainting", IEEE
TRANSACTIONS ON AUDIO, SPEECH AND
LANGUAGE PROCESSING, IEEE, US, vol. 20, no.
3, 1 March 2012 (2012-03-01), pages 922 - 932,
XP011397627, ISSN: 1558-7916, DOI: 10.1109/
TASL.2011.2168211
• YANG JICHEN ET AL: "Dictionary learning based
on M-PCA-N for audio signal sparse
representation", IET SIGNAL PROCESSING, THE
INSTITUTION OF ENGINEERING AND
TECHNOLOGY, MICHAEL FARADAY HOUSE, SIX
HILLS WAY, STEVENAGE, HERTS. SG1 2AY, UK,
vol. 12, no. 2, 1 April 2018 (2018-04-01), pages
198 - 206, XP006066620, ISSN: 1751-9675, DOI:
10.1049/IET-SPR.2015.0277
• MATHAI MERIN K ET AL: "Design and
implementation of restoration techniques for
audio denoising applications", 2015 IEEE
RECENT ADVANCES IN INTELLIGENT
COMPUTATIONAL SYSTEMS (RAICS), IEEE, 10
December 2015 (2015-12-10), pages 21 - 26,
XP032910838, DOI: 10.1109/RAICS.2015.7488382
• JULIEN MAIRAL ET AL: "Online dictionary
learning for sparse coding", PROCEEDINGS OF
THE 26TH ANNUAL INTERNATIONAL
CONFERENCE ON MACHINE LEARNING, ICML
'09, ACM PRESS, NEW YORK, NEW YORK, USA,
14 June 2009 (2009-06-14), pages 689 - 696,
XP058344334, ISBN: 978-1-60558-516-1, DOI:
10.1145/1553374.1553463

- TAUBÖCK GEORG ET AL: "Sparse Audio Inpainting: A Dictionary Learning Technique to Improve its Performance - Convention Paper 10402", 149TH AES CONVENTION, 27 October 2020 (2020-10-27), Online, pages 1 - 10, XP093074819, Retrieved from the Internet <URL:https://www.aes.org/tmpFiles/elib/20230818/20939.pdf> [retrieved on 20230818]

- TAUBOCK GEORG ET AL: "Dictionary Learning for Sparse Audio Inpainting", IEEE JOURNAL OF SELECTED TOPICS IN SIGNAL PROCESSING, IEEE, US, vol. 15, no. 1, 21 December 2020 (2020-12-21), pages 104 - 119, XP011835650, ISSN: 1932-4553, [retrieved on 20210204], DOI: 10.1109/JSTSP.2020.3046422

**Description**

Field of the invention and description of prior art

The present invention relates to a method for signal processing. More specifically, the invention relates to a method, usually computer-implemented method, for filling (or even reconstructing) an input signal in the range of a gap, where the signal is missing or unreliable, using the input signal in a margin range surrounding the gap, in order to fill the gap in the signal. Ideally, in the signal thus processed the gap then contains a meaningful surrogate signal or even a reconstruction of the original input signal.

The signal is, in general, a specific type of information representable as a value varying over a signal domain (which may be time and/or space and/or another suitable field), usually in the form of an array of signal values ("data") defined over the signal domain. Generally, the signal will be a technical signal that originated from some technical source, such as a measuring device, recording equipment, imaging system, or other technical signal generator, and is usually encoded as a digital or digitalized signal. A gap in the signal is usually due to some (limited) disturbance, such as a technical fault, noise, interference, which compromises the signal in the gap during or after measurement or recording thereof. One important special case is an audio signal; and the filling of audio signals is also known as audio inpainting. The term "inpainting" has spread to the audio processing community from the image processing field, and is used for filling degraded or missing parts of data, based on its reliable part, and preferably in an unobtrusive way. Audio inpainting is e.g. discussed in the article of Adler *et al.* [1], as a signal processing technique to restore gaps, i.e. missing consecutive samples, in an audio signal, while still keeping perceptible audio artifacts as small as possible.

Audio inpainting has attracted a lot of commercial and research interest as it has many important applications. The most common approach to tackle the audio inpainting problem is to exploit prior information about the signal, i.e. to utilize reliable parts of the signal to inpaint the gaps. The reliable parts could be either exploited in the original (time) domain or with respect to some redundant dictionary. In the time domain setting, known inpainting methods (such as those described in the articles Janssen *et al.* [4], Oudre [5], and Etter [6]) are based on autoregressive (AR) signal modeling; the missing samples are filled by linear prediction using autoregressive coefficients that are learned from the neighborhood of the gap. Due to their excellent performance they are still state-of-the-art.

Other audio inpainting techniques exploit sparsity of the signal. These methods, such as those described in [1] or in Mokry *et al.* [16], formulate the inpainting problem as an optimization task, while taking into account that many real-world audio signals have an (approximately) sparse representation with respect to a suitable dictionary. However, the known sparsity-based inpainting techniques often suffer from a drop of the signal energy within the filled gap, which is the more pronounced the larger the gap is. Moreover, the computing expenses are often considerable.

In view of the above, the invention aims at overcoming the shortcomings of the prior-art reconstructions and inpainting methods. In particular, it is desired to increase the reliability of the restored signal in the gap and provide improved reconstruction performance, while keeping the computational burden moderate. The invention has a primary focus on time-dependent signals, such as audio signals, but is also intended in relation to more general types of input signals, including image and video signals.

Summary of the invention

The invention is described in independent claims 1 and 13. Further optional features of the invention are described in the dependent claims.

In particular, the invention provides a method for signal processing which starts from an input signal dependent on location within a predetermined signal domain in the form of a plurality of signal values associated with respective locations contained in a containing region within the signal domain (the containing region is the range which contains all locations of the signal values and it may be the same as the signal domain or a part of it), where the input signal comprises a gap, and the method comprises the following steps:

  defining (or identifying) the gap as a first portion within the signal domain, more specifically in the containing region, wherein signal values associated with locations in the gap are assumed to be invalid;
  providing an initial frame, i.e. a first set of dictionary signals which are defined on (at least) the containing region, wherein this initial frame is usable for modeling the signal within the containing region by linear combination of the initial dictionary signals;
  determining a deformed frame, i.e. a second set of dictionary signals defined on the containing region, which are referred to modified dictionary signals, wherein the modified dictionary signals are invertible linear combinations of the initial dictionary signals, namely, linear combinations according to an invertible deformation matrix (the deformation matrix is abbreviated $\hat{U}$ within this section; in the embodiments, the symbols $\hat{W}$, $\hat{V}$, or $\hat{U}$ are used depending on the respective implementation), wherein the deformed frame is at least partially different from the initial frame,

wherein the matrix Û is determined based on the signal values in the containing region outside the gap, by calculating analysis coefficients for the input signal with respect to the initial frame, to obtain an analysis coefficient vector, determining an invertible matrix which optimizes a vector norm of a transformed coefficient vector which is the result of transforming the analysis coefficient vector using the matrix, and using the invertible matrix thus obtained as the deformation matrix Û; and

reconstructing the signal within the gap from the signal values in the containing region outside the gap by means of a sparse reconstruction method using the deformed frame or the deformation matrix.

This solution according to the invention proposes a novel approach which is based on modeling of the dictionary to exploit and, if possible, increase sparsity of the signal. The invention starts from the observation that in practice, signals usually have the property of being sparse with respect to a suitable frame representation in the time-frequency framework, such as Short-Time Fourier Transform (STFT), which is also known as Gabor transform, or more generally in the location space/reciprocal space framework. Herein, "sparsity" of an array (i.e. vector or matrix) means that most entries in the array are zero. The measure of sparsity is the number of zero entries, which - except for an inverted sign - corresponds to taking the $\ell_0$-norm: the lower the norm, the higher the sparsity. In the context of the invention, the concept of sparsity is relaxed towards using other suitable norms, such as a $\ell_1$-norm or $\ell_{0,\infty}$-norm. The invention includes a method for modifying an initial dictionary which uses the reliable parts of the input signal around the gap with the goal to obtain a signal representation (a modified dictionary) which has increased sparsity or, in other words, reduced norm. This is achieved by means of a "sparsifying transform" which is an optimization method that "deforms" the elements of the given initial frame (e.g. Gabor vectors) such that the sparsity of the analysis coefficients of the resulting frame is maximized - i.e. its norm is minimized. The deformed frame thus obtained is then used with an inpainting method of known type to fill the input signal in the gap.

Thus, the invention offers the technical effect of an improved method for processing a signal to fill in gaps in the signal, with higher efficiency of the process and reconstruction performance, so as to lower the burden of computational calculations, while increasing the reliability of the restored signal in the gap and reducing computational complexity.

The signal values in the gap are treated as invalid. Depending on the type of signal, invalid values may be represented as zero, or another value which is used to indicate non-reliablity of the value. Also, it is possible that invalid values are identified by an additional marker attributed to the values, indicating the status of the values as "invalid" or "non-reliable" rather than "valid"/"reliable". In many embodiments, however, the actual value of the signal values in the gap is irrelevant because the gap is defined by parameters presented external to the input signal, and the signal values lying in the gap are not used.

The term "signal domain" is used herein to denote the parameter region on which the signal is defined; the term "location" is to be understood broadly and may also include location in time etc.

In a first class of the invention as claimed, the input signal is a time-dependent acoustic signal, and the signal domain is an interval of time. It was found that the method of the invention is particularly suitable for filling audio signal gaps of "medium length", i.e. lengths in the range of 10 to 100 milliseconds (ms). Evidently, also short gaps (<10 ms) will be filled efficiently. Generally, the extent of the signal domain will be finite because of practical reasons.

In a second class of the invention as claimed, the input signal is an image signal on a spatial domain, in particular a region defined in a two-dimensional plane, wherein the input signal is an image signal. Another example is a three-dimensional image signal (e.g. for an object of an archaeological reconstruction or of medical imaging) for which the signal domain is a region in two- or three-dimensional space.

The mentioned input signal may additionally be time-dependent, such as a time-dependent image (such as a movie or clip or video), defined on a signal domain which is a product of a time interval and a two- or three-dimensional region, or a subset of this product.

In a further development of the invention, in determining an invertible matrix which optimizes a vector norm of a transformed coefficient vector, a vector norm may be used which is the sum of the moduli of the components of the respective vector ($\ell_1$-norm). In a variant, any other variant of the $\ell_1$-norm, which is calculated from the moduli of the components of the respective vector, may be used; for instance, with respect to a segmentation of the vector into a number of sub-vectors or cohorts (see below for a specific example), an $\ell_{1,\infty}$-norm of the vector, which computes the maximum of the $\ell_1$-norms of the sub-vectors in the vector, or an $\ell_{1,2}$-norm of the vector, which computes the sum-of-squares (i.e. $\ell_2$-norm) of the $\ell_1$-norms of the sub-vectors over the vector, or another $\ell_{1,k}$-norm. Other suitable vector norms may be the $\ell_0$-norm (i.e. the number of vector components which are non-zero) or the $\ell_{0,\infty}$-norm (the maximum number of the number of non-zero components in each of the sub-vectors, see eq. (6) below).

In many advantageous implementations of the method of the invention, the deformation matrix is a unitary matrix, and the invertible matrix used in determining a matrix which optimizes a vector norm of a transformed coefficient vector is also a unitary matrix.

During the calculation of the analysis coefficients for the input signal with respect to the initial frame, it is advantageous to exclude the signal values which are associated with locations within the gap. This can be implemented, for instance, by skipping the respective signal values during the computations (in particular, skipping the values during the summation operations) or by setting the respective signal values to zero in advance.

Advantageously, the initial dictionary signals may be realized as signal functions localized around respective center locations with an associated window length. A common example for this type of signal functions are Gabor frames using windows, such as Von-Hann windows, with a defined window length $w_g$. Another example is a Gauss-type window, where the window length is identified with a suitably defined multiple of the variance $\sigma$, e.g. $w_g = 2\sigma$, or $w_g = 4\sigma$, or $w_g = 2.35480$ (i.e. the full width at half maximum of the Gauss function).

Furthermore, in order to improve avoiding artefacts from the "edge" of the gap, it may be advantageous to further exclude certain dictionary signals (or the corresponding analysis coefficients) and/or more signal values. For instance, also signal values associated with locations in a margin region around the gap may be excluded. This margin region may e.g. comprise guard intervals at the boundaries of the gap, the guard intervals having a width correlating with the window length $w_g$ of the initial dictionary signals, namely, a value selected from the range between 0.25 $w_g$ and 2 $w_g$ (inclusive), which includes the particular values of one window length and half the window length.

Furthermore, it may be advantageous to exclude certain initial dictionary signals, namely, those which would "pick up" significant contributions from the signal in the gap, which may be done alternatively or (preferably) in combination with the mentioned exclusion of signal values. More specifically, analysis coefficients may be excluded which correspond to initial dictionary signals which would contain contributions from signal values associated with locations in the gap, preferably locations in the gap plus locations in a margin region around the gap, wherein the margin region comprises guard intervals at the boundaries of the gap, the guard intervals having a width correlating with the window length $w_g$ of the initial dictionary signals, namely, a value selected from the range between 0.25 $w_g$ and 2 $w_g$ (inclusive), which includes the particular values of one window length and half the window length. The range of such a contribution may be defined with regard to the window length $w_g$ as mentioned above in the context of localized signal functions.

It is also remarked that the coefficient vector may have various representations: beside a straightforward vector representation, the coefficient vector may have a representation in a matrix-like array ("matrix vector") according to a segmentation into multiple vector segments, where each segment is transformed (deformed) in the same way by the deformation matrix (thus, the transformation operation may be represented as a matrix multiplication of the deformation matrix with the matrix vector). This latter representation is particularly useful where the deformation matrix has a block structure. A specific example of this is the vector representation according to the known *real DGT* [51, 52]. The norm of the coefficient vector in the form of a matrix vector can be any suitable norm that is applied to a matrix or to a vector (when the matrix vector is re-ordered into a vector). The segmentation typically accords to a structure in the analysis domain, for instance such that each segment corresponds to a specific localization in the signal domain, grouping together the various dictionary signals associated with different frequencies or reciprocal space channels at that specific localization.

According to a further aspect of the invention, the deformation matrix may have a block structure where the initial frame is divided into "cohorts", preferably a block structure which reflects how the dictionary signals are located in the signal domain. Thus, it may be advantageous to have the initial frame decomposable into a number of cohorts, each cohort containing a plurality of dictionary signals and the cohorts being mutually disjoint (thus, no two cohorts have a dictionary signal in common). For instance, a cohort may correspond to a respective index in the time dimension (or more generally, a location in the signal domain); and the linear transformation according to the invertible matrix ($\hat{U}$) operates on the initial frame (i.e. on the initial dictionary signals) in a manner preserving the cohort structure which defines the division of the initial frames into cohorts. In other words, the matrix only operates within each of the cohorts, but does not combine dictionary signals of different cohorts: this means that the linear combinations "mix" dictionary signals only within a cohort and there is no "mixing" between dictionary signals belonging to different cohorts. Furthermore, the linear transformation (the matrix) preferably operates on the number of cohorts in a manner mutually equivalent between cohorts. This offers the advantage that the matrix can be represented with a largely reduced number of rows/columns, since only the action with respect to one cohort needs to be represented in the matrix coefficients (since the matrix operates uniformly upon the cohorts). In this case, a suitable implementation may provide that the initial dictionary signals are segmented into a matrix vector as mentioned above, or more specifically, arranged according to a matrix wherein the cohorts correspond to columns, and the linear transformation is realized as a matrix operating on the matrix of the initial dictionary signals by matrix multiplication from the left.

Furthermore, each cohort may be associated with a respective location in the signal domain (such as time and/or two- or three-dimensional space). Thus, the initial dictionary signals of each cohort may be signal functions localized around a center location in the signal domain associated with the respective cohort.

Generally, the invention envisages filling (or inpainting) the gap using a sparse reconstruction method. Sparse reconstruction algorithms are well known, such as the known SParse Audio INpainter (SPAIN) method for inpainting of gaps in audio signals. According to another aspect of the invention, a modified sparse reconstruction algorithm may be used in order to achieve a more efficient usage of the increased signal sparsity and benefit from dictionary learning. This aspect suggests that for determining the invertible matrix (denoted U) which optimizes a vector norm of a transformed coefficient vector which is the result of transforming the analysis coefficient vector (denoted v) using the matrix (thus the transformed coefficient vector is Uv; the vector v may be in any suitable representation such as a conventional representation or the mentioned matrix-vector representation; it is reminded that in the vector v some of the analysis coefficients may have been excluded as mentioned above, and likewise for the corresponding matrix) an iterative method may be used according to the steps of

(a) initializing the matrix U with an identity matrix (denoted I, having the same dimension as U), and initializing a matrix level value $\rho$ with an initial value preferably equal to or smaller than 1,

(b) determining the transformed coefficient vector Uv by transforming the analysis coefficient vector using the matrix and taking the vector norm of the transformed coefficient vector,

(c) determining an updating matrix (denoted $e^{iH}$) as the exponential of a Hermitian matrix H such that the updating matrix minimizes the vector norm of a result vector of the type $e^{iH}Ux$ which is obtained by transforming the transformed coefficient vector Uv with the updating matrix $e^{iH}$ or a Taylor expansion thereof (such as I+iH) with respect to the Hermitian matrix H, under the constraint that all entries in the Hermitian matrix H are smaller than the matrix level value $\rho$,

(d) either: updating the matrix U by multiplication with the updating matrix $e^{iH}$ if the vector norm obtained in step (c) is decreased with respect to the vector norm obtained in step (b), or otherwise decreasing the matrix level value $\rho$ by multiplying with a predetermined factor smaller than 1,

and repeating steps (b) to (d) until the matrix level value falls below a predetermined lower limit value or a maximum number of iterations is reached. The matrix U thus obtained is then taken as deformation matrix Û.

In order to further reduce calculation expenses, the Hermitian matrix H may be restricted to a Hermitian matrix having at most d non-vanishing off-diagonals, where d is a predetermined positive integer, preferably 3 or 5. Furthermore, the Taylor expansion in step (c) may simply be a first-order Taylor expansion, i.e. $e^{iH} \rightarrow I+iH$. This is particularly suitable in combination with a block-structure deformation matrix as mentioned above; however, it will be clear that such combination is optional and not required.

The step of defining the gap may be realized simply by accepting a definition of the gap as input to the algorithm, or by determining those signal values which are unreliable algorithmically. Examples of determining signal values as unreliable are

- where a signal value lies out of a defined acceptable range, e.g. an audio signal value exceeding a predefined upper threshold or falling below a predefined lower threshold, or a video or image signal which corresponds to a color saturation beyond a predefined maximum saturation;

- where a signal value is associated with a region in the signal domain where the signal value is essentially constant (e.g. within a 1 % or 0.1 % range of the absolute value of the current value of the signal) within said region; and/or

- where a signal value is associated with an error occurring during a previous transmission procedure of the signal, such as a checksum error or a (repeated) error correction based on an error-correcting code.

The above-discussed methods of the invention may conveniently be coded into a computer program. Thus, the invention also includes a computer program product - such as a data storage device or an apparatus employing one of the methods of the invention based on a computer program stored on a memory of the apparatus - which contains computer program code enabling execution of any or all methods of the invention when the computer program code is executed on a computer.

Further suitable aspects and benefits of the invention will become evident from the below description of an embodiment of the invention.

Brief description of the drawings

In the following, in order to further demonstrate the present invention, illustrative and non-restrictive embodiments are discussed, as shown in the drawings, which show:

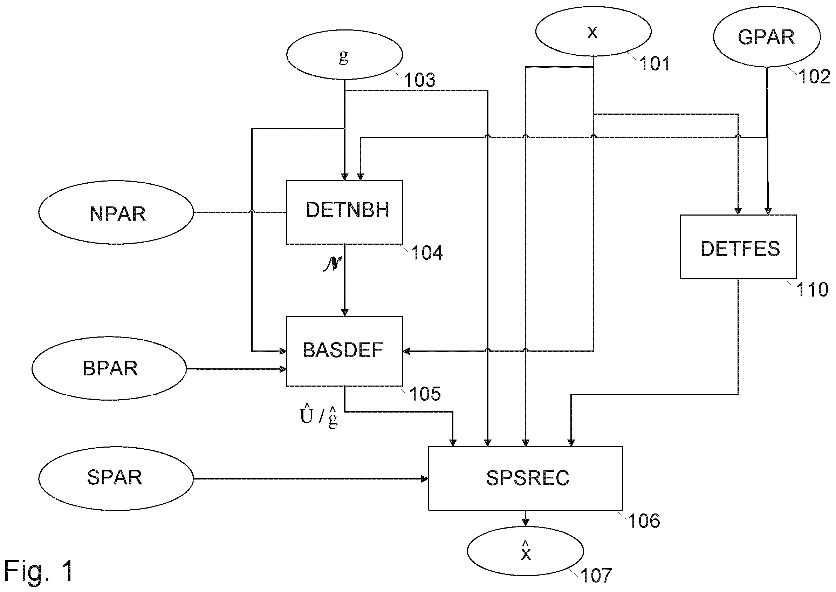

Fig. 1    a flow diagram of an implementation of the invention according to a first embodiment;

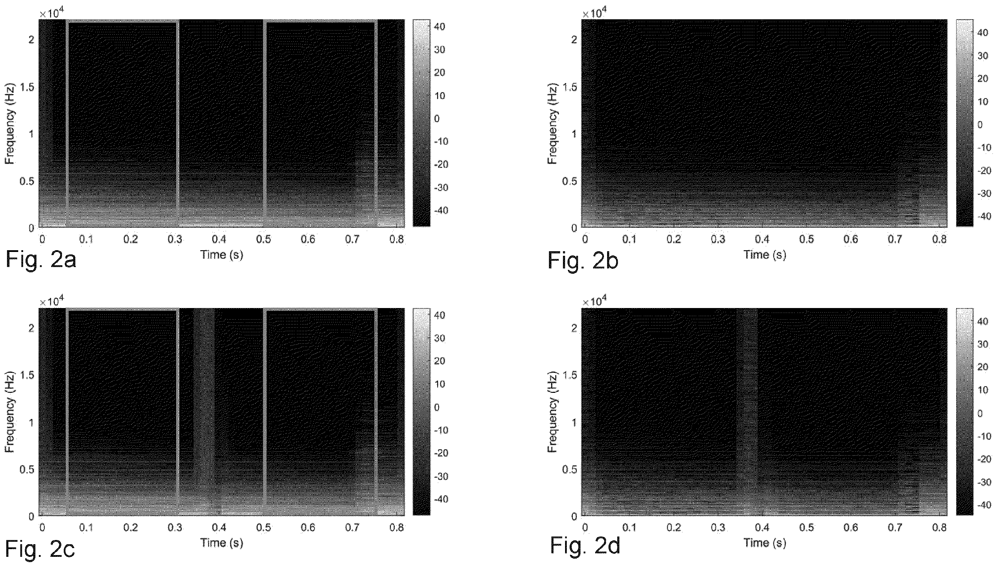

Fig. 2    illustrates an example of the audio inpainting method based on an input audio signal "a60_piano_schubert" and contains four depictions of analysis coefficients of the audio signal for different scenarios, namely, in Fig. 2a the signal without gap using a Gabor dictionary, in Fig. 2b the same signal (i.e. without gap) using a modified dictionary, in Fig. 2c the signal with a gap of 40 ms using a Gabor dictionary, and in Fig. 2d the same signal as in Fig. 2c, but using a modified dictionary; the rectangles in Fig. 2a and Fig. 2c denote the ranges used for training of the modified dictionary (time width 254 ms); and

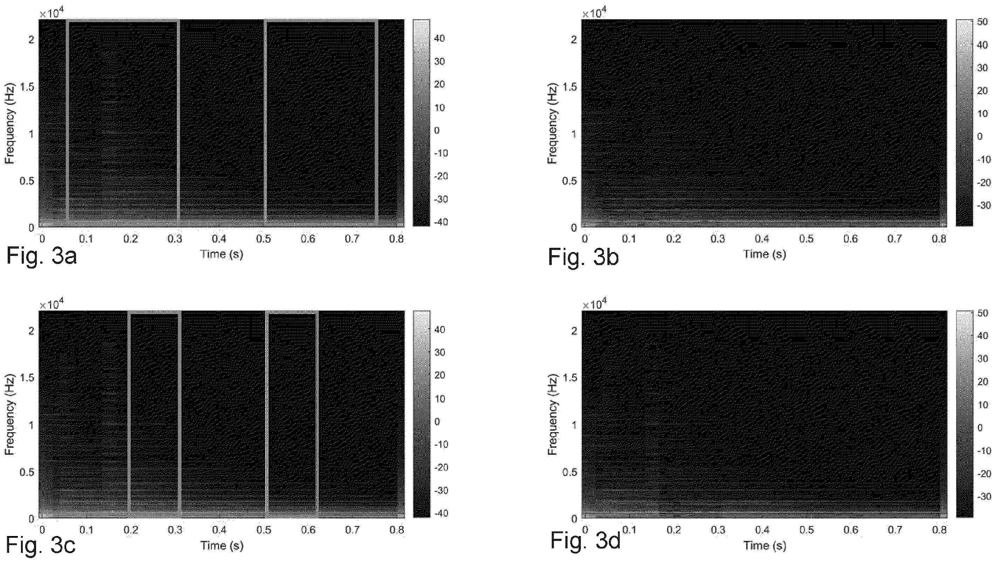

Fig. 3 illustrates the impact of the width of the learning range on the audio inpainting method using an example analysis for an input audio signal "a25_harp" (without a gap) and contains four depictions of analysis coefficients for different scenarios, namely, in Fig. 3a analysis coefficient obtained using a Gabor dictionary, where additionally training windows are denoted as rectangles, in Fig. 3b the analysis coefficients obtained from a modified dictionary based on training using the training windows of time width of 254 ms shown in Fig. 3a, in Fig. 3c the same analysis coefficients as Fig. 3a, but with training windows of smaller width (127 ms), and in Fig. 3d the analysis coefficients obtained from a modified dictionary based on training using the training windows of time width of 127 ms shown in Fig. 3c.

Detailed description of embodiments of the invention

The detailed discussion of exemplary embodiments of the invention given below is intended to illustrate the basic concepts and further advantageous developments of the invention. It will be evident to the person skilled in the art to freely combine several or all of the features discussed in relation to the embodiment and variants discussed here, as deemed suitable for a specific application of the invention. This also includes the features mentioned in the appended claims, which can be freely combined mutually and with features taken from the discussed embodiments. Throughout this disclosure, terms like "advantageous", "exemplary", or "preferable" indicate elements or dimensions which are particularly suitable (but not essential) to the invention or an embodiment thereof, and may be modified wherever deemed suitable by the skilled person, except where expressly required. It will be appreciated that the invention is not restricted to the exemplary embodiment, which is given for illustrative purpose, merely representing suitable ways to implement the invention. Furthermore, it will be clear that the reference numbers used in the claims are merely intended to improve the readability of the claims, but neither the reference numbers nor the way they are used in the claims are to be construed as limiting the scope of the claims.

Fig. 1 depicts a flow diagram showing the flow of information during a signal processing procedure according to a first embodiment of the invention, which may be implemented on a computer station by means of a computer program or a suitable combination of cooperating computer program modules.

In a first stage 101, an input signal, denoted x, is provided. Generally, the input signal x is presented in the form of a plurality of signal values associated with respective locations within the signal domain. Thus, in the case where the signal domain is time or another linear field (such as the field of real values), the input signal can be interpreted as a sequence of signal values; for instance, an input signal which is a time-dependent signal may be described as $x = \{x_n, n = 0, ..., N - 1\}$ where n is an index corresponding to a sequence of points in time, for instance $t_n = t_0 + n\Delta t$. More generally, the input signal may be seen as an array of the signal values, wherein each signal value can be identified through the (indices of) locations associated with it. Furthermore, gap parameters GPAR are input, in order to determine the gap. This may be done at a stage 102 or, in a variant not shown, together with providing the input signal x. The gap parameters specify the gap as a portion (i.e. a subset) of the signal domain by identifying the location of the gap and other gap parameters such as size and/or shape of the gap. Usually, the gap is a simple interval in time or a range in multi-dimensional domain, such as a box-range, a ball, a disk or a range of ellipsoidal shape, but it may be more complex, such as a union of intervals or ranges.

At stage 103, the (initial) dictionary is defined. The dictionary is also referred to as initial frame, and is a set $g = \{g^{(p)}\}$ of initial dictionary signals $g^{(p)}$, which are defined over the signal domain (or a subset thereof as explained below; p is a symbolic index numbering the dictionary signals). For instance, in relation to time-dependent signals, the initial frame may be chosen as a Gabor frame, which is the set of base functions of Short-Time Fourier Transformation (STFT), where the index p numbers through all combinations of time and frequency channels. Various types of Gabor frames may be used, such as frames using Von-Hann windows. The initial frame g is, as such, suitable for modeling the signal in the containing region by usual analysis, i.e. linear combination of the initial dictionary signals. However, rather than using the initial frame for filling/reconstructing the signal in the gap, a different frame is used which is constructed from the initial frame as explained below.

In most cases the initial dictionary signals $g^{(p)}$ are defined over the entire signal domain. It is remarked, however, that often this is not a necessary condition; rather it is sufficient that they are defined merely on a "containing region" within the signal domain having sufficient extent, provided it contains the gap plus a surrounding region.

In stage 104 a learning neighborhood $\mathcal{N}$ is determined. This can be done in a separate module DETNBH or within the computer program implementing the process. The learning neighborhood is usually selected as the containing region minus the gap. It can be advantageous that not only the gap itself is excluded from the neighborhood, but also an additional guard interval is excluded in order to avoid influences from insecure data at, or close to, the edge of the gap.

For instance, the guard interval may be chosen at each boundary of the gap as a stripe having a width which corresponds to a width or half-width of the window of the Gabor frame; more generally suitable values of the width will be in the range of $[0.25\, w_g, 2\, w_g]$. The exclusion of the gap may also be done in the analysis domain, i.e. the space of dictionary functions, by excluding dictionary functions which would contain contributions from the gap, possibly the gap augmented by a guard interval. The parameters for determining the neighborhood $\mathcal{N}$ are derived from the gap parameters GPAR and/or entered as external input parameters NPAR.

In stage 105, a modified dictionary, also referred to as deformed frame ĝ, is generated ("basis optimization"). The deformed frame is a set of modified dictionary signals, i.e. ĝ = {ĝ$^{(p)}$}; the modified dictionary signals ĝ$^{(p)}$ are invertible linear combinations of the initial dictionary signals, and thus have the same support domain as the initial dictionary signals. The modified dictionary signals are determined using an invertible matrix, denoted Û in Fig. 1 and referred to as deformation matrix. The deformation matrix is determined as a matrix which increases the sparsity of the input signal with respect to the deformed frame as compared to the sparsity of the input signal with respect to the initial frame (it is noted that increasing the sparsity is the same as reducing the norm of the coefficient vector obtained from the input signal by analysis using the dictionary signals). Suitably, the deformation matrix may be determined by a sub-process which seeks a matrix that optimizes the sparsity of the input signal from a predetermined set of matrices (see below) and, optionally, imposing selectable constraints as explained further below. The basis optimization (i.e. determination of the matrix Û and the deformed frame ĝ) can be done in a separate module BASDEF or within the computer program implementing the process, for instance as a sub-process. Input parameters for the basis optimization, such as the maximal number of iterations in an iterative process, the allowed number of off-diagonals in the matrix, etc., may be entered as external input parameters BPAR. Generally, the deformed frame will be at least partially different from the initial frame; so at least some of the modified dictionary signals will be different from all initial dictionary signals.

Advantageously, the determination of the invertible matrix Û is carried out based on the signal values in the containing region; herein, it is usually advantageous to exclude values as mentioned above, i.e. the signal values lying within the neighborhood $\mathcal{N}$ are used. Thus, first the analysis coefficients for the input signal restricted to the neighborhood are calculated with respect to the initial frame, producing an analysis coefficient vector $v = A_G\, x\,|\,\mathcal{N}$ , where the symbol $A_G$ stands for the analysis with respect to the initial frame g, and the symbol $...|\,\mathcal{N}$ indicates restricting the analysis to the neighborhood. The analysis coefficient vector may be in a "standard" vector representation or in another suitable representation, such as the "matrix vector" representation mentioned above according to a suitable segmentation of the analysis domain. Then, starting from the set of invertible matrices or a predetermined subset of the set of invertible matrices, such as the set of unitary matrices, or unitary matrices which are exponentials of a Hermitian having only a small number of non-zero off diagonals, and/or matrices obeying a block-structure, a matrix Û is searched which optimizes a sparsity measure: Preferably, this sparsity measure is determined through a vector norm of a vector obtained by analysis with respect to the frame deformed by the invertible matrix; this is equivalent to applying the invertible matrix to the analysis coefficient vector, i.e. vector Ûv, and determining the vector norm from this transformed coefficient vector Ûv. The vector norm may be suitable chosen from the available vector norms, for instance the $\ell_0$-norm $\|Vv\|_0$ (i.e. the number of vector components which are non-zero), or the $\ell_1$-norm $\|Vv\|_1$ (the sum of the moduli of the vector components), or the the $\ell_{0,\infty}$-norm as defined below in eq. (6), etc. Once an invertible matrix Û is found that increases the sparsity or even optimizes the sparsity measure, this matrix Û is taken as the desired deformation matrix Û. The deformed frame ĝ is calculated using this deformation matrix Û.

In the next stage 106 the reconstruction/filling of the signal is carried out. This is done by reconstructing the signal within the gap from the signal values in the containing region outside the gap (symbolically, $x|\,\mathcal{N}$ ) by means of a sparse reconstruction method using the deformed frame ĝ. The reconstruction method used in this stage 106 may be a known sparse reconstruction method, or a modified SPAIN algorithm as disclosed herein. The result is a reconstructed or remodeled output signal x̂ in a final stage 107. The stage 106 can be done in a separate module SPSREC or within the computer program implementing the process. Beside parameters derivable from the dictionaries, additional input parameters for the sparse reconstruction, such as the maximal number of iterations, may be entered as external input parameters SPAR.

Optionally, it may be provided that also the set of feasible signals $\Gamma_x$ is determined in an additional stage 110, which could be realized in a separate module DETFES. The set of feasible signals $\Gamma_x$ is the set of "compatible signals", i.e. any signals which coincide with the input signal in (at least) the neighborhood, and preferably in the containing region (or the signal domain) outside of the gap, or a suitable defined sub-set thereof. This set $\Gamma_x$ may be used as additional input to the sparse reconstruction stage (module SPSREC).

In a variant, instead of defining the gap directly, the gap may be determined from the input signal x using a suitable gap definition algorithm; in this case the parameters GPAR may specify parameters used by the gap definition algorithm. Different strategies for identifying a gap may be applicable depending on the specific nature of the underlying gap generating mechanism.

One typical scenario is the mitigation of clipping artefacts in an audio signal. Clipping causes signal degradations due to saturation effects of the amplifier: if the current value (i.e. the instantaneous value) of an audio signal exceeds or falls below certain thresholds, which may be defined through the parameter GPAR, the signal is cut off and set to these thresholds. To obtain the gap, the signal values are compared to the thresholds. A location is identified as a gap element if its corresponding signal value is identical, or close to, one of the thresholds; the set of all locations determined in this way is denoted as gap, its complement comprises all locations declared as reliable.

Another scenario is the compensation of signal packet losses in a communication network (packet loss concealment). For transmission of a signal, such as an audio signal, over a communication network, the signal information is divided into consecutive data packets using well-known coding and decoding techniques. Various impairments during transmission may occur, which will cause checksum errors of individual packets; these packets, in turn, are discarded in the receiver (and are lost). Signal parts which correspond to such lost or discarded audio packets, or more exactly the corresponding locations, will be identified as gap elements; the set of all such elements constitutes the gap.

A further scenario is based on error correcting codes, which are e.g. used to protect signal transmission or signal storage. Error correcting codes usually have the capability to correct errors up to a certain number of failures; if more failures occur, an incorrect code word will be selected. In combination with inpainting and identifying a gap, in case the closest distance (e.g. closest Hamming distance) between the received data word and any code word is in the range of the error correction capability of the used code, the signal part corresponding to this data word is marked as unreliable. This decreases decoding error probabilities in the presence of many failures.

**Modified Audio Inpainting**

In the following the mathematical background and an implementation of the invention according to another embodiment is discussed in detail, where, as a typical exemplary case, an audio signal is considered for audio inpainting. This exemplary embodiment illustrates the approach according to the invention exploiting the time-frequency sparsity of audio signals. The adaption to other signal types, such as two- or three-dimensional images, is straightforward. The audio signal is provided as a time-domain signal $x$ represented as a sequence of $N$ signal values (also referred to as samples), numbered by a time index $n$ running from 0 to $N$, i.e. $n = 0, \ldots , N - 1$. Some of the signal values are missing (or unreliable), and the indices of these missing samples are known.

The following notations are used in the present disclosure: Roman letters A, B, ..., a, b, ..., and *a, b,* ... designate matrices, vectors, and scalars, respectively. $\lfloor a \rfloor$ denotes the largest integer $\leq a$. With $[\cdot]_N = [\cdot \bmod N]$ we abbreviate the modulo-N operation due to circular indexing. The *i*th component of the vector u is $u_{i-1}$; the element in *i*th row and *j*th column of the matrix A is $A_{i-1,j-1}$. The superscripts $^T$ and $^H$ and $^*$ stand for transposition, Hermitian transposition, and (element-wise) complex conjugation, respectively. The $N \times N$ identity matrix is denoted by $I_N$; the $M \times N$ all zero matrix is denoted by $0_{M \times N}$. For a vector u, we write $\| u \|_2 = \sqrt{u^H u}$ for its Euclidean norm and supp(u) for its support. For a set $\mathcal{S}$, $card(\mathcal{S})$ denotes its cardinality, and $\chi_{\mathcal{S}}(\cdot)$ is the indicator function on $\mathcal{S}$, which is 0 if its argument is in $\mathcal{S}$ and $\infty$ otherwise. We use the notation $A_{\mathcal{S}}$ to indicate the column submatrix of A consisting of the columns indexed by $\mathcal{S}$. Similarly, for $x \in \mathbb{C}^N$ we denote by $\chi_{\mathcal{S}}$ the subvector in $\mathbb{C}^{card(\mathcal{S})}$ consisting of the entries of x indexed by $\mathcal{S}$. Furthermore, $\| u \|_0 \triangleq card(\text{supp}(u))$ and $\| u \|_1 = |u_0| + |u_1| + \cdots + |u_{N-1}|$ denote the $\ell_0$-norm and the $\ell_1$-norm of the vector $u = [u_0, u_1, \cdots , u_{N-1}]^T$, respectively. The value $\| A \|_F = \sqrt{tr(A^H A)}$ (with $tr(\cdot)$ denoting the trace of a matrix) is the Froebenius norm of the matrix A; and $\| A \|_{\infty,\infty}$ denotes the largest modulus of all entries of A. $Re(\cdot)$ and $Im(\cdot)$ are real and imaginary part of its argument, respectively.

The time-domain signal x is interpreted as $x \in \mathbb{R}^N$. The subset of the indices of missing samples is referred to as the *gap.* The rest of the indices / samples will be considered and called *reliable.*

It is natural to require that the recovered signal should maintain consistency with the reliable part to the most possible extent. This condition may described formally by introducing a (convex) set $\Gamma_x$ as the set of all feasible signals

$$\Gamma_x \triangleq \{y \in \mathbb{R}^N : M_R y = M_R x\}, \tag{1}$$

where $M_R : \mathbb{R}^N \to \mathbb{R}^N$ is the binary "reliable mask" projection operator keeping the signal samples corresponding to the reliable part, while it sets the others to zero.

Gabor Frames

This embodiment employs the known Gabor transform, also known as Short-Time Fourier Transform (STFT), for implementing the initial dictionary signals, from which the sparsified signals, i.e. modified dictionary signals, are constructed as explained below. As is known to the person skilled in the art, the Gabor transform uses a single prototype window function g which is translated in time and frequency-modulated [34, 35]. The window serves to localize the signal in time. For the discrete Gabor transform (DGT), the translation of the window is characterized by the integer window shift *a*. The number of modulations (i.e. channels in the transformed "reciprocal space") is denoted by *M* and will be referred to as the number of frequency channels (in more general implementations, they may also be called wave number channels, reciprocal space channels, or the like). Often it is also required that the signal length *N* is divisible by *a*. Then, the system consists of $P = MN/a$ Gabor vectors $\mathrm{g}^{(p)} \in \mathbb{C}^N$, $p = 0, ... , P$ - 1. We will refer to these vectors as the *Gabor atoms,* and the whole system

$$\mathbf{G} = \{\mathrm{g}^{(p)} : p = 0, ... , P - 1\} = \{\mathrm{g}^{(k,m)} : k = 0, ... , (N/a) - 1, m = 0, ... , M - 1\}$$

with $\mathrm{g}_n^{(k,m)} = g_{[n-ak]_N}\, e^{2\pi\mathrm{i}(n-ak)m/M}$ and $p = kM + m$ is referred to as the *Gabor dictionary.*

Note that the Gabor window g is usually identified with its shorter counterpart, i.e. the interval (time interval, more generally subrange in the signal domain) comprising only those elements of g that are within the smallest interval containing the support of g. The length of this interval is usually much smaller than *N* and is denoted as *window length* $w_{\mathrm{g}}$.

We also remark that the set G of Gabor atoms is overcomplete. In fact, there exist suitable combinations of g and the parameters *a* and *M* such that the resulting Gabor system forms a frame for $\mathbb{C}^N$, i.e. any $\mathrm{x} \in \mathbb{C}^N$ can be represented in a stable way as a linear combination of the

Gabor vectors [34, 40]. Although Gabor bases can be constructed, they have undesired properties [35]. Therefore, overcomplete systems which allow non-unique signal representations are usually preferred. Also the signal is formally treated as a complex vector, although the underlying input signal (e.g. audio signal) is real-valued.

In frame theory, the so-called *analysis operator* $\mathrm{A} \colon \mathbb{C}^N \to \mathbb{C}^P$ produces coefficients from the signal, whereas its adjoint D = A$^{\mathrm{H}}$, the *synthesis operator* $\mathrm{D} \colon \mathbb{C}^P \to \mathbb{C}^N$, generates a signal from the coefficients. Its composition S = DA is denoted as *frame operator.* In the context of Gabor frames, we use the subscript notation A$_{\mathrm{G}}$ and D$_{\mathrm{G}}$ for analysis and synthesis operators, respectively, to emphasize the Gabor structure.

In the majority of implementations of the invention the frames will correspond to the so-called *painless case* [41, 42]. Such frames have convenient properties from both theoretical and practical perspective and are typically the ones considered in signal processing. Their analysis, synthesis, and frame operators satisfy the "painless condition"

$$S = A^{\mathrm{H}}A = DD^{\mathrm{H}} = \begin{bmatrix} S_{0,0} & & 0 \\ & \ddots & \\ 0 & & S_{N-1,N-1} \end{bmatrix} \tag{2}$$

with $S_{n,n} > 0$, $n = 0, ... , N$ - 1, i.e. the frame operator matrix is a diagonal matrix with diagonal elements strictly larger than zero. (For notational simplicity, this disclosure does not distinguish between operators and their matrix representation with respect to the canonical basis throughout.) Evidently, tight frames, i.e. frames where S = $\lambda I_N$, fall within the class of painless frames. For Gabor frames, $w_{\mathrm{g}} \leq M$ implies (2). In the following, frames realizing the painless case will be considered primarily, but the generalization to non-painless frames is straightforward.

Sparse Audio INpainter - "SPAIN"

This section gives a brief review of the SPAIN algorithm, as originally presented in [16]. The SPAIN algorithm comes in two variants: the first one exploits analysis sparsity, the second one exploits synthesis sparsity (both in the time-frequency domain). Note that the sparse signal processing literature relied for a long time on the so-called synthesis model, where one seeks for a small number of coefficients synthesizing the desired signal [38, 43-46]. More recently, the analysis model appeared, where one looks directly for the signal, with the constraint that its coefficients after analysis are sparse [28, 47]. Generally, however, we can only expect these coefficients to be approximately sparse, since underlying uncertainty principles restrict the maximum degree of sparsity [35, 48, 49]. If the synthesis/analysis operators are invertible, both approaches are equivalent. As said above, usually they are not invertible. Note also that the synthesis approach is less restrictive, as for redundant systems (i.e. *P* > *N*) different coefficients lead to the same signal.

The two variants of SPAIN aim at solving the following optimization tasks, $\Gamma_{\mathrm{x}}$

$$\min_{b,y} \| \, b \, \|_0 \qquad s.\,t. \qquad y \in \Gamma_X \text{ and } \| Ay - b \|_2 \leq \epsilon, \tag{3}$$

$$\min_{b,y} \| \, b \, \|_0 \qquad s.\,t. \qquad y \in \Gamma_X \text{ and } \| y - Db \|_2 \leq \epsilon, \tag{4}$$

where (3) and (4) present the formulation referred to as the analysis and the synthesis variant, respectively. The abbreviation s.t. means "such that". In both cases, the minimizing y will be the reconstructed time-domain signal. It is obvious that a brute-force solution of (3) and (4) will be infeasible due to its huge computational complexity. As an alternative, SPAIN applies the Alternating Direction Method of Multipliers (ADMM) [50] adapted to the optimization of the above non-convex problems. The ADMM is able to solve problems of the form

$$\min_{y} f(y) + g(Ay), \tag{5}$$

where $y \in \mathbb{C}^N$, $A \colon \mathbb{C}^N \to \mathbb{C}^P$ is a linear operator, and $f$ and $g$ are real convex functions. A reformulation of (5) yields

$$\min_{y,b} f(y) + g(b) \qquad s.\,t. \qquad Ay - b = 0, $$

from which an Augmented Lagrangian (in scaled form) is computed. Finally, this Lagrangian is minimized individually with respect to each involved variable in an iterative fashion until a sufficiently accurate solution is obtained. Note that in case of SPAIN, only an approximate solution can be expected, since (3) and (4) violate the convexity assumption.

Of special importance in SPAIN is also the segment-wise application of the algorithms, where first the time-domain signal is segmented using overlapping windows, second the algorithms are applied segment-wise using an overcomplete DFT frame, and finally the restored blocks are combined via an overlap-add scheme.

The inventors recognized that when eq. (3) and (4) were to be applied to the signal consisting of the gap plus the adjacent parts of length $w_g$ before and after the gap *as a whole* using a Gabor frame of appropriate dimension, the method would fail completely for medium length gaps. This is caused by the regularizer $\|\cdot\|_0$, which penalizes the Gabor coefficients *globally* instead of *locally*. In particular, the reconstructed signal will be set to zero within the gap because its Gabor coefficients remain to be sparse globally. In order to cope with this behavior, we propose a modification of the original SPAIN algorithm that works without segmentation.

Modified SPAIN Algorithm

As mentioned above, Gabor systems impose a time-frequency structure. In case of the DGT, the P = *MN/a* Gabor analysis coefficients can be rearranged into an $M \times (N/a)$ matrix (it is assumed that *a* divides *N)*, whose column and row indices correspond to discrete time and discrete frequency, respectively; this is a specific example of a "matrix vector" representation. Mathematically, we express this operation via the (invertible) mapping $\tau \colon \mathbb{C}^P \to \mathbb{C}^{M \times (N/a)}$ to denote the mapping between a P-dimensional vector z and a matrix $\tau(z)$ having dimension $M \times (N/a)$; it will be appreciated that this rearrangement does neither affect the total number nor the values of the coefficients. Note further that for any audio signal $x \in \mathbb{R}^N$ the complex-valued matrix $\tau(A_G x)$ is conjugate-symmetric with respect to the frequency/row index. Hence, we do not loose any information if we only keep the rows corresponding to the first $M' = \lfloor M/2 \rfloor + 1$ frequency indices; the remaining rows can be easily reobtained by exploiting conjugate-symmetry. Hereinafter, this restriction operation is expressed via the additional mapping $\sigma \colon \mathbb{C}^{M \times (N/a)} \to \mathbb{C}^{M' \times (N/a)}$; its reversed operation, i.e. the conjugate-symmetric extension, is denoted by $\sigma^\dagger \colon \mathbb{C}^{M' \times (N/a)} \to \mathbb{C}^{M \times (N/a)}$. For notational simplicity, we use the abbreviation $\eta$ for the composite mappings, i.e. $\eta(\cdot) \triangleq \sigma(\tau(\cdot))$ and $\eta^\dagger(\cdot) \triangleq \tau^{-1}(\sigma^\dagger(\cdot))$. The mapping $\mathbb{R}^N \to \mathbb{C}^{M' \times (N/a)}$, $x \mapsto \eta(A_G x)$ is often referred to as *real DGT* [51, 52].

For each $X = [x_0 \, x_1 \cdots x_{(N/a)-1}] \in \mathbb{C}^{M' \times (N/a)}$ let us define the $\ell_{0,\infty}$-norm according to:

$$\| X \|_{0,\infty} \triangleq \max\{\| x_0 \|_0, \| x_1 \|_0, \ldots, \| x_{(N/a)-1} \|_0\}. \tag{6}$$

This $\ell_{0,\infty}$-norm uses the matrix vector representation (where each sub-vector $x_i$ represents a cohort) and computes the maximum number among the number of non-zero entries in each of the sub-vectors. Instead of (3), we propose to solve the following two optimization tasks,

$$\min_{B,y} \| B \|_{0,\infty} \quad \text{s.t.} \quad y \in \Gamma_X \text{ and } \| \eta(A_G y) - B \|_F \le \epsilon, \tag{7}$$

$$\min_{B,y} \| B \|_{0,\infty} \quad \text{s.t.} \quad y \in \Gamma_X \text{ and } \| y - D_G \eta^\dagger(B) \|_2 \le \epsilon, \tag{8}$$

where, again, (7) and (8) present the formulation referred to as the analysis and the synthesis variant, respectively. In the context of the invention the ADMM technique is adapted to facilitate solving the problems of (7) and (8). The choice of ADMM is driven by two main reasons; scalability and fast convergence, which implies that it can be used for large scale problems.

A-SPAIN Modified

We will first consider the analysis variant (7). Let us fix a sparsity parameter k and let

$$\mathcal{S}_k \triangleq \left\{ X \in \mathbb{C}^{M\prime \times (N/a)} : \| X \|_{0,\infty} \le k \right\}.$$

In order to apply the ADMM algorithm, we rewrite (7) with $\varepsilon = 0$ as

$$\min_{B,y} \chi_{\mathcal{S}_k}(B) + \chi_{\Gamma_x}(y) \quad \text{s.t.} \quad A_G y - \eta^\dagger(B) = 0$$

The Augmented Lagrangian is given as

$$\mathcal{L}_\delta(y, \lambda, B) = \chi_{\mathcal{S}_k}(B) + \chi_{\Gamma_x}(y) + \lambda^{\mathrm{T}} \left( A_G y - \eta^\dagger(B) \right) + \frac{\delta}{2} \left\| A_G y - \eta^\dagger(B) \right\|_2^2,$$

leading to the Augmented Lagrangian in *scaled form* [53],

$$\mathcal{L}_\delta(y, r, B) = \chi_{\mathcal{S}_k}(B) + \chi_{\Gamma_x}(y) + \frac{\delta}{2} \left\| A_G y - \eta^\dagger(B) + r \right\|_2^2 - \frac{\delta}{2} \| r \|_2^2.$$

The update rules of ADMM now yield,

$$B^{(i+1)} = arg\,min_{B:\|B\|_{0,\infty} \le k} \left\| A_G y^{(i)} - \eta^\dagger(B) + r^{(i)} \right\|_2 \tag{9}$$

$$y^{(i+1)} = arg\,min_{y \in \Gamma_x} \left\| A_G y - \eta^\dagger(B^{(i+1)}) + r^{(i)} \right\|_2 \tag{10}$$

$$r^{(i+1)} = r^{(i)} + A_G y^{(i+1)} - \eta^\dagger(B^{(i+1)}). \tag{11}$$

Note that the conjugate-symmetry is preserved in each of these steps, provided that the initialization vectors $y^{(0)}$ and $r^{(0)}$ are real-valued and conjugate-symmetric, respectively.

The B-update (9) is solved exactly (cf. [14, p.42]) by means of a time-frequency hard-thresholding operator $\mathcal{H}_k^{\mathrm{TF}}: \mathbb{C}^{M\prime \times (N/a)} \to \mathbb{C}^{M\prime \times (N/a)}$ defined according to

$$\mathcal{H}_k^{\mathrm{TF}}\left( [x_0 \ x_1 \cdots x_{(N/a)-1}] \right) = [\mathcal{H}_k(x_0) \ \mathcal{H}_k(x_1) \cdots \mathcal{H}_k(x_{(N/a)-1})],$$

where $\mathcal{H}_k(\cdot)$ is essentially (note: in order to correctly deal with the conjugate-symmetry, the modulus has to be scaled for at most two elements of the vector; i.e. at frequency 0 and, for even *M,* also at frequency *M*/2) the conventional hard-thresholding operator for vectors, which preserves the $k$ elements with largest modulus and sets everything else to zero. More specifically, the B-update (9) is given by

$$B^{(i+1)} = \mathcal{H}_k^{\mathrm{TF}}\big(\eta(A_{\mathrm{G}}y^{(i)} + r^{(i)})\big).$$

In fact, the y-update (10) is equivalent to applying the inverse DGT using the canonical dual window to $\eta^\dagger(B^{(i+1)})$ - $r^{(i)}$ and then projecting it onto the set of feasible solutions $\Gamma_x$.

The overall algorithm is initialized with a certain pre-defined sparsity parameter $k = s$, that will be increased in every $t^{\mathrm{th}}$ iteration by $s$, until the stopping criterion is met. A pseudocode reflecting the A-SPAIN algorithm is given as "Algorithm 1" in Table 1; all Tables are given at the end of the description. Note that usually s = $t$ = 1; however, as in the original SPAIN algorithm, we allow for more flexible settings in order to speed up the algorithm (s > 1) or supporting its convergence ($t$ > 1). The input object $D_{\mathrm{G}}^{\mathbf{cd}}$ denotes the synthesis operator of the canonical dual Gabor frame [34]. In practice, of course, only the windows for $A_{\mathrm{G}}$ and $D_{\mathrm{G}}^{\mathbf{cd}}$ as well as the parameters $a$ and $M$ are passed to the algorithm, and not the full matrices.

S-SPAIN Modified

Next, considering the synthesis variant (8), let us fix a sparsity parameter k and rewrite (8) with $\varepsilon = 0$ as

$$\min_{B,y}\chi_{s_k}(B) + \chi_{\Gamma_x}(y) \quad \text{s.t.} \quad D_{\mathrm{G}}\,\eta^\dagger(B) - y = 0$$

The Augmented Lagrangian is given as

$$\mathcal{L}_\delta(y,\lambda,B) = \chi_{s_k}(B) + \chi_{\Gamma_x}(y) + \lambda^{\mathrm{T}}\big(D_{\mathrm{G}}\,\eta^\dagger(B) - y\big) + \frac{\delta}{2}\big\|D_{\mathrm{G}}\,\eta^\dagger(B) - y\big\|_2^2,$$

leading to the Augmented Lagrangian in *scaled form* [53],

$$\mathcal{L}_\delta(y,r,B) = \chi_{s_k}(B) + \chi_{\Gamma_x}(y) + \frac{\delta}{2}\big\|D_{\mathrm{G}}\,\eta^\dagger(B) - y + r\big\|_2^2 - \frac{\delta}{2}\|\,r\,\|_2^2.$$

The update rules of ADMM now yield

$$B^{(i+1)} = arg\,min_{B:\|B\|_{0,\infty}\le k}\big\|D_{\mathrm{G}}\,\eta^\dagger(B) - y^{(i)} + r^{(i)}\big\|_2 \tag{12}$$

$$y^{(i+1)} = arg\,min_{y\in\Gamma_x}\big\|D_{\mathrm{G}}\,\eta^\dagger(B^{(i+1)}) - y + r^{(i)}\big\|_2 \tag{13}$$

$$r^{(i+1)} = r^{(i)} + D_{\mathrm{G}}\,\eta^\dagger(B^{(i+1)}) - y^{(i+1)}. \tag{14}$$

Here, the conjugate-symmetry is preserved in each of these steps, provided that both initialization vectors $y^{(0)}$ and $r^{(0)}$ are real-valued.

The *B*-update (12) is a challenging task to solve; in fact, it is a sparse reconstruction problem utilizing the $\ell_{0,\infty}$-norm. However, we will rely on the convenient ADMM behavior that it still converges even when the individual steps are computed only approximately. Adapting the idea in [53] to our setting, we suggest to apply the time-frequency hard-thresholding operator $\mathcal{H}_k^{\mathrm{TF}}$ to the analysis coefficients of $y^{(i)}$ - $r^{(i)}$ with respect to the canonical dual frame, or, more formally, $B^{(i+1)} \approx B_{\mathrm{appr}}^{(i+1)} = \mathcal{H}_k^{\mathrm{TF}}\big(\eta(A_{\mathrm{G}}^{\mathbf{cd}}(y^{(i)} - r^{(i)}))\big)$,

Here, $A_{\mathrm{G}}^{\mathbf{cd}}$ denotes the analysis operator of the canonical dual Gabor frame. Again, the overall algorithm is initialized with a certain pre-defined sparsity parameter $k = s$, that will be increased in every $t^{\mathrm{th}}$ iteration by s, until the stopping criterion is met. A pseudocode reflecting the S-SPAIN algorithm is given as "Algorithm 2" in Table 2.

Dictionary Learning

As pointed out above, all SPAIN variants (including both original and modified versions) rely on the observation that real-world audio signals have approximately sparse representations with respect to Gabor dictionaries. One may ask whether other dictionaries admit even more sparse signal representations and, in turn, improve the audio inpainting capabilities if applied instead of a Gabor dictionary. Clearly, it is not trivial at all to come up with a dictionary which yields better results than the Gabor dictionary.

The invention proposes to *learn* an optimized dictionary from the reliable signal parts around the gap, aiming at obtaining a more sparse representation within the gap as well, offering that the inpainting performance is enhanced. Of course, this is based on the assumption that the optimum sparsifying dictionary does not change too fast over time. Furthermore, we need some additional reliable signal parts in the neighborhood of the gap to learn the dictionary, which, in case we deal with more than one gap, requires some distance between adjacent gaps. In order to keep the learning effort low, we will not learn it from scratch; instead the invention proposes to "deform" the initial dictionary, i.e. in the present embodiment, a Gabor dictionary.

Dictionary Learning Framework

The starting point is the modified SPAIN algorithm as discussed above. Motivated by (4), we aim at finding a frame satisfying the painless condition (2) with analysis operator A such that for the degraded signal x, Ax is as sparse as possible with respect to the $\ell_{0,\infty}$-norm in a neighborhood of the gap. More formally, we intend to solve

$$\min_{A} \| \ (\eta(Ax)) | \mathcal{N} \ \|_{0,\infty} \qquad s.\,t. \quad A^{H}A \text{ is diagonal,} \qquad (15)$$

where the notation $| \ \mathcal{N}$ represents the restriction to the neighborhood. Let $A_G$ denote the analysis operator of a given Gabor frame satisfying the painless condition (2). (The analysis vector $\eta(A_G x)$ corresponds to the vector v that was mentioned in the introductory part as denoting the analysis coefficient vector.) We next "deform" the Gabor frame using a unitary "deformation" operator $W \colon \mathbb{C}^P \to \mathbb{C}^P$ by defining a modified analysis operator

$$A = WA_G. \qquad (16)$$

Note that we restrict to unitary deformations, since these preserve the painless condition (2) due to

$A^{H}A = A_{G}^{H}W^{H}WA_{G} = A_{G}^{H}A_{G} = S_{G}$ . Furthermore, we are only interested in deformation operators which increase sparsity in frequency direction and which preserve the conjugate-symmetry of the DGT. Therefore, we additionally impose the following structure on W,

$$W \colon \mathbb{C}^P \to \mathbb{C}^P, \ z \mapsto \tau^{-1}(V \, \tau(z)), \qquad (17)$$

where $V \in \mathbb{C}^{M \times M}$ is a unitary matrix (i.e. dimension $M \times M$). It is clear that (17) represents a well-defined unitary operator. It will be appreciated that (17) contains a simple matrix product of the matrices V and $\tau(z)$ (thus largely reducing the complexity of operation as compared to a general $P \times P$-matrix W acting on a P-dimensional vector z). This operation corresponds to a transformation which only combines ("mixes") the coefficients of the individual columns while excluding a mixing between columns. Moreover all columns are treated in the same manner, i.e. the mixing within each column is the same for all columns. Thus, (17) denotes a special realization of a matrix block structure where the matrix represents a transformation which preserves the cohort structure.

It is remarked that, as mentioned above, in this embodiment the column index corresponds to the discrete time index; more generally, the cohorts may correspond to a location in the signal domain, while the index within a cohort (i.e. the row index) relates to modulations (frequency/reciprocal space). In other implementations, depending on the respective implementation, the block structure may be finer (e.g. treating segments within a column as cohorts) or coarser (e.g. combining defined groups of columns into cohorts) or more complex (e.g. combining segments of columns, etc.).

Regarding the structure of V, we have to distinguish between *M* even and *M* odd. For *M* even, let

$$V = V_e = \begin{bmatrix} 1 & & & 0 \\ & U & & \\ & & 1 & \\ 0 & & & FU^*F \end{bmatrix}, \qquad (18)$$

whereas for *M* odd,

$$V = V_o = \begin{bmatrix} 1 & & 0 \\ & U & \\ 0 & & FU^*F \end{bmatrix}, \qquad (19)$$

with unitary $U \in \mathbb{C}^{\lfloor (M-1)/2 \rfloor \times \lfloor (M-1)/2 \rfloor}$ and flipping matrix

$$F = \begin{bmatrix} 0 & & 1 \\ & \cdot^{\cdot^{\cdot}} & \\ 1 & & 0 \end{bmatrix} \in \mathbb{C}^{\lfloor (M-1)/2 \rfloor \times \lfloor (M-1)/2 \rfloor}.$$

It is easy to see that for a conjugate-symmetric z,

$$W(z) = \eta^{\dagger}(U_{e/o}\, \eta(z)) \qquad (20)$$

with

$$U_e = \begin{bmatrix} 1 & & 0 \\ & U & \\ 0 & & 1 \end{bmatrix} \text{ and } U_o = \begin{bmatrix} 1 & 0 \\ 0 & U \end{bmatrix}, \qquad (21)$$

respectively. Combining (16), (20), and (15), we obtain

$$\min_{U_{e/o} \in \mathcal{U}_{e/o}} \| U_{e/o}(\eta(A_G x)) | \mathcal{N} \|_{0,\infty} ,$$

where $\mathcal{U}_{e/o}$ denotes the set of all unitary matrices $U_{e/o}$ with the structure described in (21).

However, the inventors noted that this is a highly non-convex problem, so that we can only hope to find an approximate solution. To this end, it is suggested that the $\ell_0$-norms be relaxed to $\ell_1$-norms [14, 43], and furthermore it may be suitable (although not necessary) to replace the max-operation in the definition of the $\ell_{0,\infty}$-norm by a summation or other calculation, which is convenient in terms of calculation speed. An advantageous choice is replacing the norm in favor of an $\ell_1$-norm or a variant thereof, such as $\ell_{1,2}$-norm or $\ell_{1,\infty}$-norm, where $\ell_{1,k}$-norm stands for the $\ell_k$-norm evaluated for the M'-dimensional vector formed from the norms of the sub-vectors $x_i$; thus, in the following we use an $\ell_{1,1}$-norm (which is equivalent to the $\ell_1$-norm on the entire vector). This results in the following optimization problem:

$$\hat{U}_{e/o} = arg\ min_{U_{e/o} \in \mathcal{U}_{e/o}} \sum_{q \in \mathcal{N}} \| U_{e/o}(\eta(A_G x))_q \|_1. \qquad (22)$$

Finally, it is worthwhile to note that the minimization (22) is effectively carried out over the set $\mathcal{U}$ of unitary $\lfloor (M-1)/2 \rfloor \times \lfloor (M-1)/2 \rfloor$ matrices U according to (21), and that the optimum Û is given by

$$\hat{U} = arg\ min_{U \in \mathcal{U}} \sum_{q \in \mathcal{N}} \| UE_{e/o}(\eta(A_G x))_q \|_1, \qquad (23)$$

where

$$E_e = \begin{bmatrix} 0_{\lfloor (M-1)/2 \rfloor \times 1} & I_{\lfloor (M-1)/2 \rfloor} & 0_{\lfloor (M-1)/2 \rfloor \times 1} \end{bmatrix},$$

$$\mathrm{E_o} = \begin{bmatrix} 0_{\lfloor (M-1)/2 \rfloor \times 1} & I_{\lfloor (M-1)/2 \rfloor} \end{bmatrix}.$$

Suppose we have found an optimized unitary matrix $\hat{U}$ (we will present an algorithm for this task in the next subsection). Inserting it into (21) and (18)/(19) yields $\hat{U}_{e/o}$ and $\hat{V}_{e/o}$, respectively. From this it is also possible to construct the optimized matrix W of (17); but in practice this is cumbersome because of the large dimension of W. Therefore, we use a different approach: via (17) and (16), we obtain the analysis operator of the deformed frame as,

$$\hat{A} \colon \mathbb{C}^N \to \mathbb{C}^P, \ y \mapsto \tau^{-1}(\hat{V}_{e/o} \, \tau(A_G y)).$$

Likewise, the synthesis operator of its canonical dual frame is given by

$$\check{D}^{cd} \colon \mathbb{C}^P \to \mathbb{C}^N, \ z \mapsto D_G^{cd} \tau^{-1}(\hat{V}_{e/o}^H \tau(z))$$

The above enables to re-formulate Algorithm 1 and Algorithm 2 in a way such that the learned sparsity-optimized frame is used instead of the Gabor frame. More specifically, for the analysis variant we replace $A_G$ with $\hat{A}$ and $D_G^{cd}$ with $\check{D}^{cd}$. In the algorithm, the (optimized) matrix $\hat{U}_{e/o}$ is required as an additional input. This algorithm was named A-SPAIN-LEARNED, and a pseudocode reflecting this algorithm is given as "Algorithm 3" in Table 3. A Matlab code program implementing the Algorithm 3 is given in Table 4. The Algorithm 3 contains calls to functions from the open-source toolbox LTFAT [59].

For the synthesis variant, an approach is used which optimizes the analysis operator of the canonical dual frame. Then, the synthesis operator of the corresponding original frame is expected to represent any signal in the feasible set $\Gamma_x$ with fewer coefficients than the synthesis operator of the given Gabor frame. Again, the algorithm requires the specification of the (optimized) matrix $\hat{U}_{e/o}$ as additional input. This algorithm was named S-SPAIN-LEARNED, and a pseudocode reflecting this algorithm is given as "Algorithm 4" in Table 5. A Matlab code program implementing the Algorithm 4 is given in Table 6. The Algorithm 4 contains calls to functions from the open-source toolbox LTFAT [59].

Basis Optimization Technique

Equation (23) codes the basis optimization. In order to solve (23), a basis optimization technique originally developed in a different context of channel estimation [54, 55] is adapted for the present signal processing tasks. To simplify notation we denote $\tilde{M} \triangleq \lfloor (M-1)/2 \rfloor$ and define $\eta_{e/o}(\cdot) \triangleq E_{e/o} \eta(\cdot)$ Because the minimization problem (23) is non-convex (since $\mathcal{U}$ is not a convex set), standard convex optimization techniques will be problematic or cannot be used at all. We therefore propose an approximate iterative algorithm that relies on the following facts: (1) Every unitary $\tilde{M} \times \tilde{M}$ matrix U can be represented in terms of a Hermitian $\tilde{M} \times \tilde{M}$ matrix H as $U = e^{iH}$; and (2) the matrix exponential $U = e^{iH}$ can be approximated by a Taylor expansion (with respect to H), for instance its first-order Taylor expansion: $U \approx I + iH$ (in this section we use the shorthand I for the $\tilde{M} \times \tilde{M}$ identity matrix $I_{\tilde{M}}$).

Even though U is unitary and I + iH is not, this approximation will be good if $\| H \|_{\infty,\infty}$ is small. Because of this condition, it will be advantageous to construct U iteratively: starting with the identity matrix, we perform *a small* update at each iteration, using the approximation $U \approx I + iH$ in the optimization criterion, whereas the complete exponential $e^{iH}$ is used for *updating* U (thus, the iterated U is always unitary). More specifically, at the rth iteration, we consider the following update of the unitary matrix $U^{(r)}$:

$$U^{(r+1)} = e^{iH^{(r)}} U^{(r)},$$

where $H^{(r)}$ is a small Hermitian matrix that remains to be optimized. Note that $U^{(r+1)}$ is again unitary because both $U^{(r)}$ and $e^{iH^{(r)}}$ are unitary. Ideally, it would be preferred to optimize $H^{(r)}$ according to (23), i.e. by minimizing

$$\sum_{q \in \mathcal{N}} \| U^{(r+1)} E_{e/o}(\eta(A_G x))_q \|_1$$

$$= \sum_{q \in \mathcal{N}} \| U^{(r+1)} (\eta_{e/o}(A_G x))_q \|_1$$

$$= \sum_{q \in \mathcal{N}} \| e^{iH^{(r)}} U^{(r)} (\eta_{e/o}(A_G x))_q \|_1$$

Since this problem is still non-convex, we use the approximation $e^{iH} \approx I + iH$ (first-order Taylor expansion), and thus the final minimization problem at the rth iteration is

$$H^{(r)} = arg\ min_{H \in \mathcal{H}_r} \sum_{q \in \mathcal{N}} \| (I_{\tilde{M}} + iH)\ U^{(r)}\ (\eta_{e/o}(A_G x))_q \|_1. \qquad (24)$$

Here, $\mathcal{H}_r$ denotes the set of all Hermitian $\tilde{M} \times \tilde{M}$ matrices H that are small in the sense that $\| H \|_{\infty,\infty} \leq \rho_r$, where $\rho_r$ is a positive constraint level (a small $\rho_r$ ensures a good accuracy of our approximation $U \approx I + iH$ and also that $e^{iH^{(r)}}$ is close to I). The problem (24) is convex and thus can be solved by standard convex optimization techniques [57].

The next step at the rth iteration is to test whether the cost function is smaller for the new unitary matrix $e^{iH^{(r)}} U^{(r)}$, i.e. whether

$$\sum_{q \in \mathcal{N}} \| e^{iH^{(r)}} U^{(r)}\ (\eta_{e/o}(A_G x))_q \|_1 < \sum_{q \in \mathcal{N}} \| U^{(r)}\ (\eta_{e/o}(A_G x))_q \|_1.$$

In the positive case, we actually perform the update of $U^{(r)}$ and we retain the constraint level $\rho_r$ for the next iteration:

$$U^{(r+1)} = e^{iH^{(r)}} U^{(r)}, \quad \rho_{r+1} = \rho_r$$

Otherwise, we reject the update of $U^{(r)}$ and reduce the constraint level $\rho_r$:

$$U^{(r+1)} = U^{(r)}, \quad \rho_{r+1} = \frac{\rho_r}{2}$$

This construction guarantees the cost function sequence $\sum_{q \in \mathcal{N}} \| U^{(r)}\ (\eta_{e/o}(A_G x))_q \|_1$, r = 0,1, ... to be monotonically decreasing.

The above-described iteration process is terminated if $\rho_r$ falls below a prescribed threshold or if the number of iterations exceeds a certain value. The iteration process is initialized by the identity matrix I (i.e. $I_{\tilde{M}}$), because the "undeformed" Gabor dictionary is known to yield relatively sparse analysis coefficients. We note that efficient algorithms for computing the matrix exponentials $e^{iH^{(r)}}$ are well-known (see e.g. [56]).

Finally, we would like to emphasize that if we restrict the minimization of (24) to the set $\mathcal{H}_{r,d}$ of small Hermitian matrices with at most d non-vanishing off-diagonals, we obtain reduced computational complexity, at the costs of a potentially suboptimum variant of the algorithm. In some cases, the choice of such a modification will be mandatory, especially if we deal with large-scale problems. The overall basis optimization algorithm (which also uses an off-diagonal parameter d as input) is represented as a pseudocode as "Algorithm 5" in Table 7. A Matlab code program implementing the Algorithm 5 is given in Table 8.

All algorithms 1 to 5 were implemented and executed in the known Matlab programming language, with Algorithm 5 additionally using the convex optimization package CVX, which is a Matlab-based modeling language destined for solving convex programming [58]. Table 4, Table 6 and Table 8 show the respective program codes. Table 9 shows the program code of a subroutine called by the codes of Table 4 and Table 6. Algorithms 3 and 4 also use functions in the known open-source toolbox LTFAT [59].

Choosing the Learning Neighborhood $\mathcal{N}$

This section deals with how to select the neighborhood $\mathcal{N}$ of the gap, which specifies the (input) training matrix $(\eta_{e/o}(A_G x))|_{\mathcal{N}}$ for Algorithm 5. It seems to be obvious that it should be as close as possible to the gap since this increases the chance that the learned sparse representation is also a sparse representation for the signal part within the gap. On the other hand, we also expect small "guard" intervals between the gap and training borders to be mandatory to add, in order to avoid that unreliable data from the gap influences our training data. According to the underlying Gabor structure, this guard interval should be at least of length $w_g$ (length of Gabor window). Regarding the size of the neighborhood we have to somehow rely on intuition. A larger neighborhood yields a larger training matrix $(\eta(A_G x))|_{\mathcal{N}}$ and, probably, more accurate training results but it also increases the likelihood that signal variations occur within the neighborhood. Such signal variations could yield a dictionary adapted to signal parts which are essentially independent of the signal within the gap.

Suppose the signal $x \in \mathbb{R}^N$ has a gap at the indices $n = n_B, n_B + 1, ..., n_E$. Taking into account the guard intervals, the neighborhood is given by $\mathcal{N} = \mathcal{N}_B \cup \mathcal{N}_E$ with

$$\mathcal{N}_B = \left\{ k : \lfloor (n_B - w_g)/a \rfloor - L_{\mathcal{N}} \le k < \lfloor (n_B - w_g)/a \rfloor \right\},$$

$$\mathcal{N}_E = \left\{ k : \lceil (n_E + w_g)/a \rceil < k \le \lceil (n_E + w_g)/a \rceil + L_{\mathcal{N}} \right\}$$

i.e. a part before and a part after the gap. Its overall length is $2L_{\mathcal{N}}$.

Examples - Simulation

In the following and with reference to Figs. 2 and 3, the dictionary learning method according to the invention was tested using a numerical evaluation of an example input signal. In the Figs. 2a to 3d the analysis coefficients of a respective analysis calculation of a signal are depicted as functions of the time and frequency, wherein the shades indicate the moduli (i.e. absolute values) of the coefficients, corresponding to the scale to the right of each figure.

A conventional setup was used which corresponds to the setup of O.Mokry *et al.* [17]. As main performance measure, the signal-to-noise ratio (SNR) is used here, which is defined as

$$\text{snr}(\text{x}_{\text{orig}}, \text{x}_{\text{inp}}) = 10 \log_{10} \frac{\|\text{x}_{\text{orig}}\|_2^2}{\|\text{x}_{\text{orig}} - \text{x}_{\text{inp}}\|_2^2} \quad [\text{dB}],$$

where $\text{x}_{\text{orig}}$ and $\text{x}_{\text{inp}}$ denote original and inpainted signal within the gaps, respectively. Clearly, higher snr values reflect better reconstruction. The average SNR is computed by first computing the particular values of SNR in dB, and then taking the average.

As another quantity for describing the quality reconstruction, the PEMO-Q criterion [60] may be used, which takes a model of the human auditory system into account, and therefore, is closer to the subjective evaluation than the SNR. The PEMO-Q criterion defines a measured quantity called *objective difference grade* (ODG), which can be interpreted as the degree of perceptual similarity of $\text{x}_{\text{orig}}$ and $\text{x}_{\text{inp}}$. The ODG attains values from -4 (minus 4, very annoying) up to 0 (imperceptible), expressing the effect of audio artifacts in the restored signal.

In the experiments made by the inventors, a collection of ten music recordings sampled at 44.1 kHz were used, which exhibit different levels of sparsity with respect to the original Gabor representation. The signals were obtained from the known EBU SQAM dataset [61]. In each test instance, the input was a signal containing 5 gaps at random positions. The lengths of the gaps ranged from 5 ms up to 50 ms. For fixed lengths, the results over all ten signals consisting of the 5 gaps were averaged.

Throughout these experiments a tight Gabor frame was used with the Hann window of length $w_g$ = 2800 samples (approximately 64 ms), window shift $a$ = 700 samples and with M = 2800 frequency channels. We used the fast implementation of Gabor transforms offered by the LTFAT toolbox [51, 52, 59] in our computations, and we adopted its time-frequency conventions. The calculations were carried out according to the Algorithms 3 to 5 and the Matlab codes illustrated in the Tables. The code of Algorithm 5 is coded and executed in CVX, which is a Matlab-based modeling language destined for solving convex programming [58]. For the basis optimization algorithm, we set the maximum number of iterations to $r_{\max}$ = 20, the off-diagonal parameter to $d$ = 3, and the remaining parameters to $\rho_{\text{start}}$ = 1 and $\varepsilon = 2^{-20}$. Finally, all SPAIN variants used the input parameters s = $t$ = 1 and $\varepsilon$ = 0.001.

Referring to Figs. 2a to 2d, one sequence of calculations had the purpose to analyze the sparsity of the analysis coefficients of real-world audio signals with respect to the optimized frame and to compare it with the analysis coefficients using the original Gabor frame. More specifically, Figs. 2a to 2d illustrate analysis coefficients calculated from the signal "a60_piano_schubert" from the EBU SQAM dataset [61], into which a gap of length 40 ms was introduced by replacing the signal by zero values. Figs. 2a and 2b relate to the signal without gap, Figs. 2c and 2d to the signal with the gap having a length of 40 ms. In Figs. 2a and 2c, the Gabor dictionary was used, in Figs. 2b and 2d the learned dictionary according to the invention. The coefficients within the green rectangles are used for training, corresponding to a neighborhood length parameter of $L_{\mathcal{N}}$ = $4w_g/a$ = 16. As expected, the representations with respect to the learned dictionary are more sparse than the ones with respect to the Gabor dictionary. Although the training coefficients have a certain distance from the gap area, the learned dictionary also sparsifies the original signal within the gap area. This shows that the sparsifying dictionary does not change too fast over time.

Referring to Figs. 3a to 3d, another sequence of calculations served to investigate how the size of the learning

neighborhood $\mathcal{N}$ around the gap impacts the sparsity of the learned representation. To this end, Fig. 3a to 3d depicts the analysis coefficients of the signal "a25_harp" from the EBU SQAM dataset [61]. Figs. 3a and 3c show coefficients obtained using Gabor dictionary, Figs. 3b and 3d learned dictionaries. The coefficients within the green rectangles are used for training: the coefficients of Fig. 3b are obtained from training according to Fig. 3a, and the coefficients of Fig. 3d are obtained from training according to Fig. 3c. Note that the neighborhood length parameter used to obtain Fig. 3b was $L_{\mathcal{N}}$ = $4w_g/a$ = 16, whereas the neighborhood length parameter used to obtain Fig. 3d was $L_{\mathcal{N}}$ = $2w_g/a$ = 8. It is seen that the analysis coefficients with respect to the dictionary obtained by a larger training set are more sparse, especially for the coefficients in the training areas.

Further evaluations were made to assess how the size of the training neighborhood impacts the inpainting performance. To that end, we considered the same two cases as in the previous subsection, i.e. two different neighborhoods, one with length parameter $L_{\mathcal{N}}$ = $4w_g/a$ = 16 and the other one with length parameter $L_{\mathcal{N}}$ = $2w_g/a$ = 8. It was found that a version with smaller learning neighborhood outperforms a corresponding version with larger neighborhood for almost all gap lengths in terms of SNR and for all gap length in terms of ODG. This behavior is observed for both analysis and synthesis variants. It seems that for the considered scenarios, the benefit of only using learning coefficients close to the gap outweighs potential other disadvantages of small training sets. Hence, for all further comparisons, we restricted to the training neighborhood with length parameter $L_{\mathcal{N}}$ = $2w_g/a$ = 8. Furthermore, it was found that the method according to the invention produced distinctly better outcomes of restored signals, as compared to various other existing audio inpainting methods, in particular in terms of ODG values, over the whole gap length range (5 to 50 ms).

The experimental results demonstrated that the proposed dictionary learning approach yields large performance gains, in particular in combination with the modified analysis SPAIN variant, and significantly outperforms known inpainting approaches. It is emphasized that the presented dictionary learning framework will be applicable to other sparsity-based inpainting techniques apart from SPAIN as well. Furthermore, it is expected that suitable adaptations to e.g. (re-)weighted $\ell_1$-minimization methods will also increase their performance. Moreover, it is emphasized that it is possible to replace the Gabor frame by any other frame (e.g. non-stationary Gabor frames) satisfying the painless condition as long as this frame offers a localization in the time-frequency structure, or more generally, in the location space/reciprocal space structure for other types of input signals.

## Image inpainting

The invention is not restricted to signals on a one-dimensional domain, but can also be used for filling or reconstructing of signals on a two- or higher-dimensional domain with gaps (such as a "hole" in an image). The inpainting of signals "living" in a two- or more-dimensional domain according to the invention is made according to the same basic concepts as presented above, and in the following discussion of a further embodiment, only the differences to the above embodiment for audio inpainting are discussed to clarify suitable adaptations. Thus, in the following the mathematical background and an implementation of the invention according to a further embodiment is discussed in detail, where, as a typical exemplary case, a grayscale image signal is considered for *image inpainting*. The generalization to more than two dimensions, e.g. processing of a three-dimensional image signal, will be evident to the skilled person from the following discussion. Also, the extension to colored images (or other types of vector information) is straightforward by considering each color component (or vector component) separately. We assume that the grayscale image signal is provided as a two-dimensional (2D) signal x represented as a collection of $N_1 N_2$ signal values (also referred to as samples), numbered by a location (position) index $(n_1, n_2)$ where $n_1 = 0, \dots, N_1 - 1$ and $n_2 = 0, \dots, N_2 - 1$. Each signal value represents the (light) intensity of an image pixel at a certain position using, e.g., the convention $0 \leq x \leq 1$ (0...black; 1... white). Furthermore, the dynamic range is usually limited, so that only a finite number of quantized values are considered within this 0-1-range. We assume that some of the signal values are missing (or unreliable), and the position indices of these missing samples are known. The subset of the indices of missing samples is referred to as the *gap*. Typically, the gap is a 2D sub-region within $\{0, \dots, N_1 - 1\} \times \{0, \dots, N_2 - 1\}$, of, e.g., circular or rectangular shape. However, more general shapes are also possible.

It is natural to require that the recovered signal should maintain consistency with the reliable part to the most possible extent. This condition may be described formally by introducing a set $\Gamma_x$ as the set of all feasible signals

$$\Gamma_x \triangleq \{y \in [0,1]^{N_1 \times N_2} : M_R y = M_R x\}, \tag{1a}$$

where $M_R: [0,1]^{N_1 \times N_2} \to [0,1]^{N_1 \times N_2}$ is the binary "reliable mask" projection operator keeping the signal samples corresponding to the reliable part, while it sets the others to zero.

Initial Frame

This embodiment employs the known 2D Gabor transform, for implementing the initial dictionary signals, from which the modified dictionary signals, are constructed. As is known to the person skilled in the art, the 2D Gabor transform uses a single prototype 2D window function g which is 2D-translated in location and 2D-frequency-modulated [34, 35]. The window serves to localize the signal with respect to location (position). For the discrete 2D-Gabor transform (DGT), the translation of the window is characterized by the integer window shifts $a_1$ and $a_2$. The total number of 2D-modulations (i.e. channels in the transformed "reciprocal space") is given by $M_1 M_2$, where $M_1$ and $M_2$ denote the number of individual 1D-modulations in the respective subdirections, and will be referred to as the number of frequency channels (in more general implementations, they may also be called wave number channels, reciprocal space channels, or the like). Often it is also required that the $N_1$ and $N_2$ are divisible by $a_1$ and $a_2$, respectively. Then, the system consists of $P = M_1 M_2 N_1 N_2 / (a_1 a_2)$

Gabor matrices $g^{(p)} \in \mathbb{C}^{N_1 \times N_2}$, p = 0, ..., P - 1. We will refer to these matrices as the *Gabor atoms,* and the whole system

$$\mathbf{G} = \left\{ g^{(p)} : p = 0, ..., P - 1 \right\} = \{ g^{(k_1, m_1, k_2, m_2)} : k_1 = 0, ..., (N_1/a_1) - 1, m_1 = 0, ..., M_1 - 1,$$

$$k_2 = 0, ..., (N_2/a_2) - 1, m_2 = 0, ..., M_2 - 1 \}$$

with $g_{n_1,n_2}^{(k_1,m_1,k_2,m_2)} = g_{[n_1 - a_1 k_1]_{N_1}, [n_2 - a_2 k_2]_{N_2}} e^{2\pi i (n_1 - a_1 k_1) m_1 / M_1} e^{2\pi i (n_2 - a_2 k_2) m_2 / M_2}$  is referred to as the *Gabor dictionary.*

Often, the prototype 2D window function g is chosen as product, i.e., $g_{n_1,n_2} = (g_1)n_1 (g_2)n_2$, of individual 1D window functions $g_1$ and $g_2$, such as 1D Von-Hann windows and 1D Gauss-type windows (as used in the audio inpainting example described above).

We also remark that the set G of Gabor atoms is overcomplete. In fact, there exist suitable combinations of g and the parameters $a_1$, $a_2$, $M_1$, and $M_2$ such that the resulting Gabor system forms a frame for $\mathbb{C}^{N_1 \times N_2}$, i.e., any $x \in \mathbb{C}^{N_1 \times N_2}$ can be represented in a stable way as a linear combination of the Gabor matrices [34, 40]. Note that the signal is formally treated as a complex matrix, although the underlying input signal x (e.g. grayscale image) is real-valued with $0 \le x \le 1$. Let us denote by $vec_{N_1 \times N_2} : \mathbb{C}^{N_1 \times N_2} \to \mathbb{C}^{N_1 N_2}, x \mapsto vec_{N_1 \times N_2}\{x\}$ with $\left( vec_{N_1 \times N_2}\{x\} \right)_{\text{ind}_{N_1 \times N_2}(n_1, n_2)} = x_{n_1, n_2}$, where $\text{ind}_{N_1 \times N_2}: \{0, ..., N_1 - 1\} \times \{0, ..., N_2 - 1\} \to N_1 N_2, (n_1, n_2) \mapsto n_1 N_2 + n_2$, the row-wise stacking operator (any other stacking operator, e.g., column-wise stacking operator, would be equally suitable, as long as different stacking operators are not mixed). It follows that the system

$$\mathbf{G_{vec}} = \left\{ vec_{N_1 \times N_2}\{g^{(p)}\} : p = 0, ..., P - 1 \right\}$$

forms a frame for $\mathbb{C}^{N_1 N_2}$ and any vectorized grayscale image $vec_{N_1 \times N_2}\{x\} \in [0,1]^{N_1 N_2} \subset \mathbb{R}^{N_1 N_2}$ can be represented in a stable way as a linear combination of the vectors in $G_{vec}$. Moreover, we can associate an *analysis operator* $A: \mathbb{C}^{N_1 N_2} \to \mathbb{C}^P$, which produces coefficients from vectorized image signals, and its adjoint D = $A^H$, the *synthesis operator* $D: \mathbb{C}^P \to \mathbb{C}^{N_1 N_2}$, which generates vectorized 2D signals from the coefficients. Its composition S = DA is denoted as *frame operator.* Again, we use the subscript notation $A_G$ and $D_G$ for analysis and synthesis operators, respectively, to emphasize the underlying 2D Gabor structure. In the majority of implementations of the invention the frames will correspond to the so-called *painless case* [41, 42], for which the frame operator matrix S is a diagonal matrix with diagonal elements strictly larger than zero.

Cohort structure of initial frame

Also in this embodiment, a segmentation into cohorts may be used. We partition the frame consisting of the $P = M_1 M_2 N_1 N_2 / (a_1 a_2)$ frame vectors $vec_{N_1 \times N_2}\{g^{(p)}\}$ into $N_1 N_2 / (a_1 a_2)$ cohorts $C^{(k_1, k_2)} = \{vec_{N_1 \times N_2}^{\{(k_1, m_1, k_2, m_2)\}} : m_1 = 0, ..., M_1 - 1, m_2 = 0, ..., M_2 - 1\}$ indexed by $k_1 = 0, ..., (N_1/a_1) - 1, k_2 = 0, ..., (N_2/a_2) - 1$. Note that each cohort $C^{(k_1, k_2)}$ consists of $M_1 M_2$ frame vectors which are all "localized" around the vectorized location (position) $ind_{N_1 \times N_2}(a_1 k_1, a_2 k_2)$. (The matrices in

$\mathrm{vec}_{N_1 \times N_2}^{-1}\left\{ C^{(k_1, k_2)} \right\}$ are localized around $(a_1 k_1, a_2 k_2)$.)

It follows that the P analysis coefficients of a vectorized image can be rearranged into an $M_1 M_2 \times N_1 N_2/(a_1 a_2)$ matrix, whose column and row indices correspond to location (position) and channel number in the transformed "reciprocal space", respectively; this is a specific example of a "matrix vector" representation. Mathematically, we express this operation via the (invertible) mapping $\tau: \mathbb{C}^P \to \mathbb{C}^{M_1 M_2 \times N_1 N_2/(a_1 a_2)}$ to denote the mapping between a P-dimensional vector z and a matrix $\tau(z)$ having dimension $M_1 M_2 \times N_1 N_2/(a_1 a_2)$; it will be appreciated that this rearrangement does neither affect the total number nor the values of the coefficients. Note further that for any vectorized image signal $\mathrm{x} \in [0,1]^{N_1 N_2} \subset \mathbb{R}^{N_1 N_2}$ the complex-valued matrix $\tau(A_G \mathrm{x})$ satisfies certain conjugate-symmetry relations due to the real-valuedness of x which could be further exploited by means of a restriction operation expressed via the additional mapping $\sigma: \mathbb{C}^{M_1 M_2 \times N_1 N_2/(a_1 a_2)} \to \mathbb{C}^{M' \times N_1 N_2/(a_1 a_2)}$ (see also the audio inpainting example described above). Its reversed operation, i.e. the conjugate-symmetric extension, is denoted by $\sigma^\dagger: \mathbb{C}^{M' \times N_1 N_2/(a_1 a_2)} \to \mathbb{C}^{M_1 M_2 \times N_1 N_2/(a_1 a_2)}$. For notational simplicity, we use the abbreviation $\eta$ for the composite mappings, i.e. $\eta(\cdot) \triangleq \sigma(\tau(\cdot))$ and $\eta^\dagger(\cdot) \triangleq \tau^{-1}(\sigma^\dagger(\cdot))$. We emphasize that the use of the restriction operation is optional; if no restriction operation is used, we set $M' = M_1 M_2$, $\eta(\cdot) \triangleq \tau(\cdot)$, and $\eta^\dagger(\cdot) \triangleq \tau^{-1}(\cdot)$.

Sparse Image Inpainting

For each $\mathrm{X} = [\mathrm{x}_0\ \mathrm{x}_1 \cdots \mathrm{x}_{N_1 N_2/(a_1 a_2)-1}] \in \mathbb{C}^{M' \times N_1 N_2/(a_1 a_2)}$ let us define the $\ell_{0,\infty}$-norm according to:

$$\| X \|_{0,\infty} \triangleq \max\{\| \mathrm{x}_0 \|_0, \| \mathrm{x}_1 \|_0, \dots, \| \mathrm{x}_{N_1 N_2/(a_1 a_2)-1} \|_0\}.$$

This $\ell_{0,\infty}$-norm uses the matrix vector representation (where each sub-vector $\mathrm{x}_i$ represents a cohort) and computes the maximum number among the number of non-zero entries in each of the sub-vectors. We propose to solve the following two optimization tasks,

$$\min_{B,y} \| B \|_{0,\infty} \quad s.\,t. \quad y \in \mathrm{vec}_{N_1 \times N_2}\{\Gamma_{\mathrm{x}}\} \ \text{and} \ \| \eta(A_G y) - B \|_F \leq \epsilon, \qquad (7a)$$

$$\min_{B,y} \| B \|_{0,\infty} \quad s.\,t. \quad y \in \mathrm{vec}_{N_1 \times N_2}\{\Gamma_{\mathrm{x}}\} \ \text{and} \ \| y - D_G \eta^\dagger(B) \|_2 \leq \epsilon, \qquad (8a)$$

where, again, (7a) and (8a) present the formulation referred to as the analysis and the synthesis variant, respectively. In both cases the y that (jointly with B) achieves the minimum will be the reconstructed vectorized image signal; the reconstructed 2D image signal is then given by $\mathrm{vec}_{N_1 \times N_2}^{-1}\{y\}$. In the context of the invention, the ADMM technique is adapted to facilitate solving the problems of (7a) and (8a). Due to the introduced vectorized representations, the actual implementation is essentially the same as in the audio inpainting example described above; potential remaining minor adaptations are evident and straightforward.

Dictionary Learning Framework

The starting point is the sparse image inpainting formulation as discussed above. We aim at finding a frame satisfying the painless condition (2) with analysis operator A such that for the degraded vectorized image signal $\mathrm{vec}_{N_1 \times N_2}\{x\}$, $A \mathrm{vec}_{N_1 \times N_2}\{x\}$ is as sparse as possible with respect to the $\ell_{0,\infty}$-norm in a neighborhood of the gap. More formally, we intend to solve

$$\min_A \left\| \left( \eta\left(A \mathrm{vec}_{N_1 \times N_2}\{x\}\right) \right) |_{\mathcal{N}} \right\|_{0,\infty} \quad s.\,t. \quad A^H A \text{ is diagonal,} \qquad (15a)$$

where the notation $| \mathcal{N}$ represents the restriction to the neighborhood. Let $A_G$ denote the analysis operator of a given Gabor frame satisfying the painless condition (2). (The analysis vector $\eta(A_G \text{vec}_{N_1 \times N_2}\{x\})$ corresponds to the vector v that was mentioned in the introductory part as denoting the analysis coefficient vector.) We next "deform" the Gabor frame using a unitary "deformation" operator $W: \mathbb{C}^P \to \mathbb{C}^P$ by defining a modified analysis operator

$$A = WA_G. \tag{16a}$$

Note that we restrict to unitary deformations, since these preserve the painless condition (2) due to $A^H A = A_G^H W^H W A_G = A_G^H A_G = S_G$. Furthermore, we are only interested in deformation operators which increase sparsity in frequency direction and which, in case the restriction operation $\sigma(\cdot)$ is applied, preserve the mentioned conjugate-symmetry relations of the DGT (for real-valued signals). Therefore, we additionally impose the following structure on W,

$$W: \mathbb{C}^P \to \mathbb{C}^P, \ z \mapsto \tau^{-1}(V \, \tau(z)), \tag{17a}$$

where $V \in \mathbb{C}^{M_1 M_2 \times M_1 M_2}$ is a unitary matrix (i.e. dimension $M_1 M_2 \times M_1 M_2$). It is clear that (17) represents a well-defined unitary operator. It will be appreciated that (17a) contains a simple matrix product of the matrices V and $\tau(z)$ (thus largely reducing the complexity of operation as compared to a general $P \times P$-matrix W acting on a P-dimensional vector z). This operation corresponds to a transformation which only combines ("mixes") the coefficients of the individual columns while excluding a mixing between columns. Moreover all columns are treated in the same manner, i.e. the mixing within each column is the same for all columns. Thus, (17a) denotes a special realization of a matrix block structure where the matrix represents a transformation which preserves the cohort structure.

It is remarked that, as mentioned above, in this embodiment the column index corresponds to the location (position) index; the index within a cohort (i.e. the row index) relates to 2D modulations (channel number in the transformed "reciprocal space"). In other implementations, depending on the respective implementation, the block structure may be finer (e.g. treating segments within a column as cohorts) or coarser (e.g. combining defined groups of columns into cohorts) or more complex (e.g. combining segments of columns, etc.).

For ease of understanding, we continue with the case that does not apply the restriction operation $\sigma(\cdot)$, so that $M'$ = $M_1 M_2$, $\eta(\cdot) \triangleq \tau(\cdot)$, and $\eta^{\dagger}(\cdot) \triangleq \tau^{-1}(\cdot)$. Combining (16a), (17a), and (15a), we obtain

$$\min_{V \in \mathcal{U}} \left\| V \left( \eta \left( A_G \text{vec}_{N_1 \times N_2}\{x\} \right) \right) | \mathcal{N} \right\|_{0,\infty}, \tag{22a}$$

where $\mathcal{U}$ denotes the set of all unitary $M' \times M'$ matrices V. However, the inventors noted that this is a highly non-convex problem, so that we can only hope to find an approximate solution. To this end, it is suggested that the $-\ell_0$-norms be relaxed to $\ell_1$-norms [14, 43], and furthermore it may be suitable (although not necessary) to replace the max-operation in the definition of the $\ell_{0,\infty}$-norm by a summation or other calculation, which is convenient in terms of calculation speed. An advantageous choice is replacing the norm in favor of an $\ell_1$-norm or a variant thereof, such as $\ell_{1,2}$-norm or $\ell_{1,\infty}$-norm, where $\ell_{1,k}$-norm stands for the $\ell_k$-norm evaluated for the M'-dimensional vector formed from the norms of the sub-vectors $x_i$; thus, in the following we use an $\ell_{1,1}$-norm (which is equivalent to the $\ell_1$-norm on the entire vector). This results in the following optimization problem:

$$\hat{V} = \arg \min_{V \in \mathcal{U}} \sum_{q \in \mathcal{N}} \left\| V \left( \eta \left( A_G \text{vec}_{N_1 \times N_2}\{x\} \right) \right)_q \right\|_1 \tag{23a}$$

Suppose we have found an optimized unitary matrix $\hat{V}$. From this it is also possible to construct the optimized matrix W of (17a); but in practice this is cumbersome because of the large dimension of W (as we had with the one-dimensional case above for audio inpainting). Therefore, we use a different approach: via (17a) and (16a), we obtain the analysis operator of the deformed frame as,

$$\hat{A}: \mathbb{C}^{N_1 N_2} \to \mathbb{C}^P, \ y \mapsto \tau^{-1}(\hat{V} \, \tau(A_G y)).$$

Likewise, the synthesis operator of its canonical dual frame is given by

$$\check{D}^{cd} \colon \mathbb{C}^P \to \mathbb{C}^{N_1 N_2}, \ z \mapsto D_G^{cd} \tau^{-1}(\widehat{V}^H \tau(z))$$

The above enables to re-formulate (7a) and (8a) in a way such that the learned sparsity-optimized frame is used instead of the Gabor frame. Note that optimization problem (23a) can be solved by the same basis optimization technique as used in the audio inpainting example described above.

Choosing the Learning Neighborhood $\mathcal{N}$

Finally, this section deals with how to select the neighborhood $\mathcal{N}$ of the gap, which specifies the (input) training matrix $(\eta(A_G \mathrm{vec}_{N_1 \times N_2}\{x\})) \, | \, \mathcal{N}$ used in (22a). It seems to be obvious that it should be as close as possible to the gap since this increases the chance that the learned sparse representation is also a sparse representation for the signal part within the gap. On the other hand, we also expect small "guard" areas between the gap and training borders to be mandatory to add, in order to avoid that unreliable data from the gap influences our training data. Regarding the size of the neighborhood we have to somehow rely on intuition. A larger neighborhood yields a larger training matrix $(\eta(A_G \mathrm{vec}_{N_1 \times N_2}\{x\})) \, | \, \mathcal{N}$ and, probably, more accurate training results but it also increases the likelihood that variations of the image signal occur within the neighborhood. Such variations could yield a dictionary adapted to image parts which are essentially independent of the image within the gap. To illustrate convenient choices of the neighborhood, we will consider circular or rectangular shaped gaps in the following. The extension to more general shapes is evident by deforming and/or combining suitable base shapes.

Let us first assume that the image $x \in [0,1]^{N_1 \times N_2}$ has a circular shaped gap around a center point $(c_1, c_2) \in \{0, \dots, N_1 - 1\} \times \{0, \dots, N_2 - 1\}$ with radius $r$, i.e., that image samples are missing at positions

$$\{(n_1, n_2) \in \{0, \dots, N_1 - 1\} \times \{0, \dots, N_2 - 1\} \colon (n_1 - c_1)^2 + (n_2 - c_2)^2 \leq r^2\}.$$

Then, it is convenient to choose a neighborhood with the shape of an annulus, i.e.,

$$\mathcal{N} = \left\{ (k_1, k_2) \in \left\{0, \dots, \left(\frac{N_1}{a_1}\right) - 1\right\} \times \left\{0, \dots, \left(\frac{N_2}{a_2}\right) - 1\right\} \colon (r + r_{\mathrm{guard}})^2 < (k_1 a_1 - c_1)^2 + (k_2 a_2 - c_2)^2 \leq R^2 \right\},$$

where $r_{\mathrm{guard}} \geq 0$ takes into account the guard area and R determines the size of the neighborhood. Note that $(\eta(A_G \mathrm{vec}_{N_1 \times N_2}\{x\})) \, | \, \mathcal{N}$ consists precisely of those columns of $\eta(A_G \mathrm{vec}_{N_1 \times N_2}\{x\})$ that correspond to the cohorts specified by the neighborhood $\mathcal{N}$.

Next, let us assume that the image $x \in [0,1]^{N_1 \times N_2}$ has a rectangular shaped gap, i.e., that that image samples are missing at positions

$$\{(n_1, n_2) \in \{0, \dots, N_1 - 1\} \times \{0, \dots, N_2 - 1\} \colon n_1^B \leq n_1 \leq n_1^E, n_2^B \leq n_2 \leq n_2^E\}.$$

Then, it is convenient to choose a neighborhood of the following ("frame-like") shape,

$$\mathcal{N} = \mathcal{N}_L \cup \mathcal{N}_R \cup \mathcal{N}_T \cup \mathcal{N}_B$$

with

$$\mathcal{N}_L = \left\{ (k_1, k_2) \in \left\{0, \dots, \left(\frac{N_1}{a_1}\right) - 1\right\} \times \left\{0, \dots, \left(\frac{N_2}{a_2}\right) - 1\right\} \colon n_1^B - n_1^G - L_1 < k_1 a_1 < n_1^B - n_1^G, n_2^B - n_2^G - L_2 < k_2 a_2 < n_2^E + n_2^G + L_2 \right\},$$

$$\mathcal{N}_R = \left\{ (k_1, k_2) \in \left\{0, \dots, \left(\frac{N_1}{a_1}\right) - 1\right\} \times \left\{0, \dots, \left(\frac{N_2}{a_2}\right) - 1\right\} \colon n_1^E + n_1^G < k_1 a_1 < n_1^E + n_1^G + L_1, n_2^B - n_2^G - L_2 < k_2 a_2 < n_2^E + n_2^G + L_2 \right\},$$

$$\mathcal{N}_T = \left\{ (k_1, k_2) \in \left\{0, \dots, \left(\frac{N_1}{a_1}\right) - 1\right\} \times \left\{0, \dots, \left(\frac{N_2}{a_2}\right) - 1\right\} \colon n_1^B - n_1^G - L_1 < k_1 a_1 < n_1^E + n_1^G + L_1, n_2^E + n_2^G < k_2 a_2 < n_2^E + n_2^G + L_2 \right\},$$

$$\mathcal{N}_{\mathrm{B}} = \left\{ (k_1, k_2) \in \left\{0, \dots, \left(\frac{N_1}{a_1}\right) - 1\right\} \times \left\{0, \dots, \left(\frac{N_2}{a_2}\right) - 1\right\} : n_1^{\mathrm{B}} - n_1^{\mathrm{G}} - L_1 < k_1 a_1 < n_1^{\mathrm{E}} + n_1^{\mathrm{G}} + L_1, n_2^{\mathrm{B}} - n_2^{\mathrm{G}} - L_2 < k_2 a_2 < n_2^{\mathrm{B}} - n_2^{\mathrm{G}} \right\},$$

where $n_1^{\mathrm{G}} \geq 0$ and $n_2^{\mathrm{G}} \geq 0$ take into account the guard area and $L_1$ and $L_2$ determine the size of the neighborhood. Again, note that $(\eta(A_{\mathrm{G}} \mathrm{ve}_{N_1 \times N_2}\{x\})) |$ consists precisely of those columns of $\eta(A_{\mathrm{G}} \mathrm{vec}_{N_1 \times N_2}\{x\})$ that correspond to the cohorts specified by the neighborhood $\mathcal{N}$.

References

[1] A. Adler, V. Emiya, M. Jafari, M. Elad, R. Gribonval, and M. Plumbley, "Audio inpainting," IEEE Trans. Audio, Speech, and Language Processing, vol. 20, no. 3, pp. 922-932, March 2012.

[2] C. Perkins, O. Hodson, and V. Hardman, "A survey of packet loss recovery techniques for streaming audio," IEEE network, vol. 12, no. 5, pp. 40-48, 1998.

[3] S. Godsill, P. Rayner, and O. Cappé, "Digital audio restoration," in Applications of digital signal processing to audio and acoustics. Springer, 2002, pp. 133-194.

[4] A. Janssen, R. Veldhuis, and L. Vries, "Adaptive interpolation of discrete-time signals that can be modeled as autoregressive processes," IEEE Trans. Ac., Sp., Sign. Proc., vol. 34, no. 2, pp. 317-330, 1986.

[5] L. Oudre, "Interpolation of missing samples in sound signals based on autoregressive modeling," Image Processing On Line, vol. 8, pp. 329-344, 2018.

[6] W. Etter, "Restoration of a discrete-time signal segment by interpolation based on the left-sided and right-sided autoregressive parameters," IEEE Trans. Signal Process., vol. 44, no. 5, pp. 1124-1135, May 1996.

[7] P. A. Esquef, V. Välimäki, K. Roth, and I. Kauppinen, "Interpolation of long gaps in audio signals using the warped burgs method," in Proc. 6th Int. Conf. on Digital Audio Effects (DAFx-03), 2003, pp. 08-11.

[8] I. Kauppinen and K. Roth, "Audio signal extrapolation-theory and applications," in Proc. DAFx, 2002, pp. 105-110.

[9] I. Kauppinen and J. Kauppinen, "Reconstruction method for missing or damaged long portions in audio signal," Journal of the Audio Engineering Society, vol. 50, no. 7/8, pp. 594-602, 2002.

[10] D. L. Donoho and P. B. Stark, "Uncertainty principles and signal recovery," SIAM J. Appl. Math., vol. 49, no. 3, pp. 906-931, Jun. 1989.

[11] D. L. Donoho, "Compressed sensing," IEEE Trans. Inf. Theory, vol. 52, no. 4, pp. 1289-1306, Apr. 2006.

[12] E. J. Candès, J. Romberg, and T. Tao, "Stable signal recovery from incomplete and inaccurate measurements," Communications on Pure and Applied Mathematics, vol. 59, no. 8, pp. 1207-1223, Aug. 2006.

[13] P. Balazs, M. Doerfler, M. Kowalski, and B. Torresani, "Adapted and adaptive linear time-frequency representations: a synthesis point of view," IEEE Sig. Proc. Mag., vol. 30, no. 6, pp. 20-31, 2013.

[14] S. Foucart and H. Rauhut, A Mathematical Introduction to Compressive Sensing, ser. Applied and Numerical Harmonic Analysis. Basel: Birkhäuser, pp. 1-44, 2013.

[15] F. Lieb and H.-G. Stark, "Audio inpainting: Evaluation of time-frequency representations and structured sparsity approaches," Signal Processing, vol. 153, pp. 291-299, 2018.

[16] O. Mokry, P. Záviška, P. Rajmic, and V. Vesel'y, "Introducing SPAIN (SParse Audio INpainter)," in 2019 27th European Signal Processing Conference (EUSIPCO). IEEE, 2019, pp. 1-5.

[17] O. Mokry and P. Rajmic, "Audio inpainting: Revisited and reweighted," arXiv preprint arXiv:2001.02480, 2020.

[18] M. Lagrange, S. Marchand, and J.-B. Rault, "Long interpolation of audio signals using linear prediction in sinusoidal modeling," Journal of the Audio Engineering Society, vol. 53, no. 10, pp. 891-905, 2005.

[19] J. Lindblom and P. Hedelin, "Packet loss concealment based on sinusoidal modeling," in Speech Coding, 2002, IEEE Workshop Proceedings. IEEE, 2002, pp. 65-67.

[20] Y. Bahat, Y. Y. Schechner, and M. Elad, "Self-content-based audio inpainting," Signal Processing, vol. 111, pp. 61-72, 2015.

[21] N. Perraudin, N. Holighaus, P. Majdak, and P. Balazs, "Inpainting of long audio segments with similarity graphs," IEEE/ACM Transactions on Audio, Speech, and Language Processing, vol. 26, no. 6, pp. 1083-1094, 2018.

[22] A. Marafioti, N. Perraudin, N. Holighaus, and P. Majdak, "A context encoder for audio inpainting," IEEE/ACM Transactions on Audio, Speech, and Language Processing, vol. 27, no. 12, pp. 2362-2372, 2019.

[23] A. Marafioti, N. Holighaus, P. Majdak, N. Perraudin et al., "Audio inpainting of music by means of neural networks," in Audio Engineering Society Convention 146. Audio Engineering Society, 2019.

[24] A. Adler, V. Emiya, M. G. Jafari, M. Elad, R. Gribonval, and M. D. Plumbley, "A constrained matching pursuit approach to audio declipping," in 2011 IEEE International Conference on Acoustics, Speech and Signal Processing (ICASSP). IEEE, 2011, pp. 329-332.

[25] B. Defraene, N. Mansour, S. De Hertogh, T. Van Waterschoot, M. Diehl, and M. Moonen, "Declipping of audio signals using perceptual compressed sensing," IEEE Transactions on Audio, Speech, and Language Processing, vol. 21, no. 12, pp. 2627-2637, 2013.

[26] K. Siedenburg, M. Kowalski, and M. Dörfler, "Audio declipping with social sparsity," in 2014 IEEE International Conference on Acoustics, Speech and Signal Processing (ICASSP). IEEE, 2014, pp. 1577-1581.

[27] Ç. Bilen, A. Ozerov, and P. Pérez, "Audio declipping via nonnegative matrix factorization," in *2015 IEEE Workshop on Applications of Signal Processing to Audio and Acoustics (WASPAA).* IEEE, 2015, pp. 1-5.

[28] S. Kitić, N. Bertin, and R. Gribonval, "Sparsity and cosparsity for audio declipping: a flexible non-convex approach," in Int. Conf. o. Lat. Var. Anal. a. Sign. Sep. Springer, 2015, pp. 243-250.

[29] F. R. Avila, M. P. Tcheou, and L. W. Biscainho, "Audio soft declipping based on constrained weighted least squares," IEEE Signal Processing Letters, vol. 24, no. 9, pp. 1348-1352, 2017.

[30] L. Rencker, F. Bach, W. Wang, and M. D. Plumbley, "Consistent dictionary learning for signal declipping," in International Conference on Latent Variable Analysis and Signal Separation. Springer, 2018, pp. 446-455.

[31] P. Záviška, P. Rajmic, Z. Průša, and V. Veselý, "Revisiting synthesis model in sparse audio declipper," in *International Conference on Latent Variable Analysis and Signal Separation.* Springer, 2018, pp. 429-445.

[32] P. Záviška, P. Rajmic, O. Mokrý, and Z. Průša, "A proper version of synthesis-based sparse audio declipper," in *ICASSP 2019-2019 IEEE International Conference on Acoustics, Speech and Signal Processing (ICASSP).* IEEE, 2019, pp. 591-595.

[33] P. Rajmic, P. Záviška, V. Veselý, and O. Mokrý, "A new generalized projection and its application to acceleration of audio declipping," Axioms, vol. 8, no. 3, p. 105, 2019.

[34] O. Christensen et al., An introduction to frames and Riesz bases. Springer, chapters 11-12, 2016.

[35] K. Gröchenig, Foundations of Time-Frequency Analysis. Boston, MA: Birkhäuser, chapters 2, 5-7, 2001.

[36] V. Mach and R. Ozdobinski, "Optimizing dictionary learning parameters for solving audio inpainting problem," Int. J. Adv. Telecomm., Electrot., Sign. a. Sys., vol. 2, no. 1, pp. 39-44, 2013.

[37] C. Guichaoua, "Dictionary learning for audio inpainting," HAL Robotics [cs. RO]. 2012, 2012.

[38] M. Aharon, M. Elad, and A. Bruckstein, "K-SVD: An algorithm for designing overcomplete dictionaries for sparse representation," IEEE Trans. Signal Process., vol. 54, no. 11, pp. 4311-4322, Nov. 2006.

[39] K. Engan, S. O. Aase, and J. H. Husoy, "Method of optimal directions for frame design," in 1999 IEEE International Conference on Acoustics, Speech, and Signal Processing. Proceedings. ICASSP99 (Cat. No. 99CH36258), vol. 5. IEEE, 1999, pp. 2443-2446.

[40] H. G. Feichtinger and T. Strohmer, Advances in Gabor analysis. Springer Science & Business Media, pp. 1-9, 2012.

[41] I. Daubechies, A. Grossmann, and Y. Meyer, "Painless nonorthogonal expansions," Journal of Mathematical Physics, vol. 27, no. 5, pp. 1271-1283, 1986.

[42] P. Balazs, M. Dörfler, F. Jaillet, N. Holighaus, and G. Velasco, "Theory, implementation and applications of nonstationary Gabor frames," Journal of computational and applied mathematics, vol. 236, no. 6, pp. 1481-1496, 2011.

[43] D. L. Donoho and M. Elad, "Optimally sparse representation in general (nonorthogonal) dictionaries via $\ell 1$ minimization," Proceedings of the National Academy of Sciences, vol. 100, no. 5, pp. 2197-2202, 2003.

[44] S. S. Chen, D. L. Donoho, and M. A. Saunders, "Atomic decomposition by basis pursuit," SIAM review, vol. 43, no. 1, pp. 129-159, 2001.

[45] R. Tibshirani, "Regression shrinkage and selection via the Lasso," J. Roy. Statist. Soc., vol. 58, pp. 267-288, 1994.

[46] A. M. Bruckstein, D. L. Donoho, and M. Elad, "From sparse solutions of systems of equations to sparse modeling of signals and images," SIAM review, vol. 51, no. 1, pp. 34-81, 2009.

[47] M. Elad, P. Milanfar, and R. Rubinstein, "Analysis versus synthesis in signal priors," Inverse problems, vol. 23, no. 3, p. 947, 2007.

[48] F. Krahmer, G. E. Pfander, and P. Rashkov, "Uncertainty in time-frequency representations on finite abelian groups and applications," Applied and Computational Harmonic Analysis, vol. 25, no. 2, pp. 209-225, 2008.

[49] L. D. Abreu and M. Speckbacher, "Donoho-Logan large sieve principles for modulation and polyanalytic Fock spaces," arXiv preprint arXiv:1808.02258, 2018.

[50] S. Boyd, N. Parikh, E. Chu, B. Peleato, J. Eckstein et al., "Distributed optimization and statistical learning via the alternating direction method of multipliers," Foundations and Trends in Machine learning, vol. 3, no. 1, pp. 1-122, 2011.

[51] P. L. Søndergaard, B. Torrésani, and P. Balazs, "The linear time frequency analysis toolbox," Int. J. Wavel., Multires. a. Inf. Process., vol. 10, no. 04, p. 1250032, 2012.

[52] Z. Průša, P. L. Søndergaard, N. Holighaus, C. Wiesmeyr, and P. Balazs, "The Large Time-Frequency Analysis Toolbox 2.0," in Sound, Music, and Motion, ser. LNCS. Springer International Publishing, 2014, pp. 419-442.

[53] P. Záviška, O. Mokr'y, and P. Rajmic, "S-SPADE done right: Detailed study of the sparse audio declipper algorithms," arXiv preprint arXiv:1809.09847, 2018.

[54] G. Tauböck and F. Hlawatsch, "Compressed sensing based estimation of doubly selective channels using a sparsity-optimized basis expansion," in 2008 16th European Signal Processing Conference, Lausanne, Switzerland, Aug. 2008.

[55] G. Tauböck, F. Hlawatsch, D. Eiwen, and H. Rauhut, "Compressive estimation of doubly selective channels in multicarrier systems: Leakage effects and sparsity-enhancing processing," IEEE J. Sel. Topics Signal Process., vol. 4, no. 2, pp. 255-271, Apr. 2010.

[56] G. H. Golub and C. F. Van Loan, Matrix Computations, 3rd ed. Baltimore: Johns Hopkins University Press, pp. 572-578, 1996.

[57] S. Boyd and L. Vandenberghe, Convex Optimization. Cambridge (UK): Cambridge university press, chapter 11, Dec. 2004.

[58] CVX: A system for disciplined convex programming (https://github.com/cvxr/CVX, June 13, 2020).

[59] LTFAT: The Large Time-Frequency Analysis Toolbox (https://ltfat.github.io, June 13, 2020).

[60] R. Huber and B. Kollmeier, "PEMO-Q-A new method for objective audio quality assessment using a model of auditory perception," IEEE Transactions on Audio, Speech, and Language Processing, vol. 14, no. 6, pp. 1902-1911, 2006.

[61] EBU SQAM CD: Sound quality assessment material recordings for subjective tests (https://tech.ebu.ch/publications/sqamcd, June 13, 2020).

Table 1:

| **Algorithm 1:** A-SPAIN-MOD |
| --- |
| **Input:** $A_G$, $D_G^{cd}$, $M_R x$, $\Gamma_x$, $s$, $t$, $\epsilon$ |
| **Output:** $\hat{x}$ |
| 1 $y^{(0)} = M_R x$, $R^{(0)} = 0$, $i = 0$, $k = s$ |
| 2 $B^{(i+1)} = \mathcal{H}_k^{TF}\left(\eta\left(A_G y^{(i)}\right) + R^{(i)}\right)$ |
| 3 $y^{(i+1)} = \underset{y \in \Gamma_x}{\arg\min}\left\| y - D_G^{cd}\left(\eta^\dagger\left(B^{(i+1)} - R^{(i)}\right)\right)\right\|_2$ |
| 4 **if** $\left\|\eta\left(A_G y^{(i+1)}\right) - B^{(i+1)}\right\|_F \leq \epsilon$ **then** |
| 5 $\quad$ terminate |
| 6 **else** |
| 7 $\quad$ $R^{(i+1)} = R^{(i)} + \eta\left(A_G y^{(i+1)}\right) - B^{(i+1)}$ |
| 8 $\quad$ $i \leftarrow i + 1$ |
| 9 $\quad$ **if** $i \mod t = 0$ **then** |
| 10 $\quad\quad$ $k \leftarrow k + s$ |
| 11 $\quad$ go to 2 |
| 12 **return** $\hat{x} = y^{(i+1)}$ |

Table 2:

---

**Algorithm 2: S-SPAIN-MOD**

**Input:** $D_G$, $A_G^{cd}$, $M_R x$, $\Gamma_x$, $s$, $t$, $\epsilon$
**Output:** $\hat{x}$

1. $y^{(0)} = M_R x$, $r^{(0)} = 0$, $i = 0$, $k = s$
2. $B^{(i+1)} = \mathcal{H}_k^{TF}\left(\eta\left(A_G^{cd}\left(y^{(i)} - r^{(i)}\right)\right)\right)$
3. $y^{(i+1)} = \underset{y \in \Gamma_x}{\arg\min} \left\| D_G\, \eta^\dagger\left(B^{(i+1)}\right) - y + r^{(i)} \right\|_2$
4. **if** $\left\| D_G\, \eta^\dagger\left(B^{(i+1)}\right) - y^{(i+1)} \right\|_2 \le \epsilon$ **then**
5.      terminate
6. **else**
7.      $r^{(i+1)} = r^{(i)} + D_G\, \eta^\dagger\left(B^{(i+1)}\right) - y^{(i+1)}$
8.      $i \leftarrow i + 1$
9.      **if** $i \mod t = 0$ **then**
10.          $k \leftarrow k + s$
11.      go to 2
12. **return** $\hat{x} = y^{(i+1)}$

---

Table 3:

---

**Algorithm 3: A-SPAIN-LEARNED**

**Input:** $A_G$, $D_G^{cd}$, $U_{e/o}$, $M_R x$, $\Gamma_x$, $s$, $t$, $\epsilon$
**Output:** $\hat{x}$

1. $y^{(0)} = M_R x$, $R^{(0)} = 0$, $i = 0$, $k = s$
2. $B^{(i+1)} = \mathcal{H}_k^{TF}\left(U_{e/o}\eta\left(A_G y^{(i)}\right) + R^{(i)}\right)$
3. $y^{(i+1)} = \underset{y \in \Gamma_x}{\arg\min} \left\| y - D_G^{cd}\left(\eta^\dagger\left(U_{e/o}^H B^{(i+1)} - U_{e/o}^H R^{(i)}\right)\right) \right\|_2$
4. **if** $\left\| U_{e/o}\eta\left(A_G y^{(i+1)}\right) - B^{(i+1)} \right\|_F \le \epsilon$ **then**
5.      terminate
6. **else**
7.      $R^{(i+1)} = R^{(i)} + U_{e/o}\eta\left(A_G y^{(i+1)}\right) - B^{(i+1)}$
8.      $i \leftarrow i + 1$
9.      **if** $i \mod t = 0$ **then**
10.          $k \leftarrow k + s$
11.      go to 2
12. **return** $\hat{x} = y^{(i+1)}$

---

## Table 4: Matlab code used for implementing Algorithm 3

```
function [data_rec, snr_iter, obj_val] = a_spain_learned(data_gapped, param, paramsolver,data_orig,Basis)
%
% Input parameters
%     data_gapped   vector of gapped signal
%     param         structure of parameters containing:
%                   a        window shift (in samples)
%                   M        number of channels
%                   mask     logical vector indicating the reliable samples
%                   gwindow  Gabor window
%                   gdual    should be chosen as canonical dual window of gwindow
%     paramsolver   structure of parameters for SPAIN containing:
%                   s        relaxation stepsize
%                   r        relaxation steprate
%                   epsilon  stopping threshold of termination function
%                   maxit    maximal possible number of iterations with particular settings
%                   store_snr switch to enable computing SNR in each iteration
%                   store_obj switch to enable storing the value of termination function in each iteration
%     data_orig     vector of original clean signal used to compute SNR during iterations
%     Basis         sparsity enhancing unitary matrix
%
% Output parameters
%     data_rec      vector of restored signal
%     snr_iter      SNR values during iterations
%     obj_iter      termination function values during iterations
%


% initialization of variables
x_hat = data_gapped;
L = length(data_gapped);
BasisInv=Basis'; %unitary matrix
zEst = Basis*(dgtreal(x_hat,param.gwindow,param.a,param.M,dgtlength(L,param.a,param.M),'timeinv'));
```

```
  % zEst = A*x_hat
dim_zEst=size(zEst);
u = zeros(dim_zEst);
k = paramsolver.s;
cnt = 1;
bestObj = Inf;

% initialization of vectors for SNR and termination function during iterations
snr_iter = NaN(paramsolver.maxit, 1);
obj_val = NaN(paramsolver.maxit, 1);

while cnt <= paramsolver.maxit

z_bar = hard_thresholding_dgtreal(zEst + u, k);

  objVal = norm((zEst - z_bar),'fro'); % update termination function

  % make a record if the objective function has decreased
  if objVal <= bestObj
     data_rec = x_hat;
     bestObj = objVal;
  end

  % termination step
  if objVal <= paramsolver.epsilon
     break
  end

  b = z_bar-u;
  syn = idgtreal(BasisInv*b,param.gdual,param.a,param.M,'timeinv');
  x_hat=syn;
  x_hat(param.mask) = data_gapped(param.mask);

  % computation and storing of SNR and termination function if requested
  if paramsolver.store_snr
     snr_iter(cnt) = snr_n(data_orig(~(param.mask)),  x_hat(~(param.mask)));
  end
  if paramsolver.store_obj
     obj_val(cnt) = objVal;
  end
  % dual variable update
  zEst = Basis*(dgtreal(x_hat,param.gwindow,param.a,param.M,dgtlength(L,param.a,param.M),'timeinv'));
  u = u + zEst - z_bar;

  % iteration counter update
  cnt = cnt+1;

  % incrementation of variable k (require less sparse signal in next iteration)
  if mod(cnt,paramsolver.r) == 0
     k = k + paramsolver.s;
  end

end
end
%end of function
```

Table 5:

| Algorithm 4: S-SPAIN-LEARNED |
| --- |
| **Input:** $D_G$, $A_G^{cd}$, $U_{e/o}$, $M_R x$, $\Gamma_x$, $s$, $t$, $\epsilon$ |
| **Output:** $\hat{x}$ |
| 1   $y^{(0)} = M_R x$, $r^{(0)} = 0$, $i = 0$, $k = s$ |
| 2   $B^{(i+1)} = \mathcal{H}_k^{TF}\left(U_{e/o}\eta\left(A_G^{cd}\left(y^{(i)} - r^{(i)}\right)\right)\right)$ |
| 3   $y^{(i+1)} = $ |
|      $\displaystyle\arg\min_{y\in\Gamma_x}\left\|D_G\,\eta^\dagger\left(U_{e/o}^H B^{(i+1)}\right) - y + r^{(i)}\right\|_2$ |
| 4   **if** $\left\|D_G\,\eta^\dagger\left(U_{e/o}^H B^{(i+1)}\right) - y^{(i+1)}\right\|_2 \le \epsilon$ **then** |
| 5     terminate |
| 6   **else** |
| 7     $r^{(i+1)} = r^{(i)} + D_G\,\eta^\dagger\left(U_{e/o}^H B^{(i+1)}\right) - y^{(i+1)}$ |
| 8     $i \leftarrow i + 1$ |
| 9     **if** $i \bmod t = 0$ **then** |
| 10      $k \leftarrow k + s$ |
| 11     go to 2 |
| 12   **return** $\hat{x} = y^{(i+1)}$ |

## Table 6: Matlab code used for implementing Algorithm 4

```
function [data_rec, snr_iter, obj_val] = s_spain_learned(data_gapped, param, paramsolver,data_orig,Basis)
%
% Input parameters
%     data_gapped   vector of gapped signal
%     param         structure of parameters containing:
%                   a       window shift (in samples)
%                   M       number of channels
%                   mask    logical vector indicating the reliable samples
%                   gwindow   Gabor window
%                   gdual     should be chosen as canonical dual window of gwindow
%     paramsolver   structure of parameters for SPAIN containing:
%                   s       relaxation stepsize
%                   r       relaxation steprate
%                   epsilon   stopping threshold of termination function
%                   maxit     maximal possible number of iterations with particular settings
%                   store_snr  switch to enable computing SNR in each iteration
%                   store_obj  switch to enable storing the value of termination function in each iteration
%     data_orig     vector of original clean signal used to compute SNR during iterations
%     Basis         sparsity enhancing unitary matrix
%
% Output parameters
%     data_rec    vector of restored signal
%     snr_iter    SNR values during iterations
%     obj_iter    termination function values during iterations
%

% initialization of variables
x_hat = data_gapped;
L = length(data_gapped);
u = zeros(size(x_hat));
k = paramsolver.s;
```

```
cnt = 1;
bestObj = Inf;
BasisInv=Basis'; %unitary matrix

% initialization of vectors for SNR and termination function during iterations
snr_iter = NaN(paramsolver.maxit, 1);
obj_val = NaN(paramsolver.maxit, 1);

while cnt <= paramsolver.maxit

    z_bar = hard_thresholding_dgtreal(Basis*(dgtreal(x_hat-u,param.gdual,param.a,param.M,
dgtlength(L,param.a,param.M),'timeinv')), k);

    x_zwisch = idgtreal(BasisInv*z_bar,param.gwindow,param.a,param.M,'timeinv');

    objVal = norm(x_zwisch(1:(length(x_hat))) - x_hat);

    % make a record if the objective function has decreased
    if objVal <= bestObj
        data_rec = x_hat;
        bestObj = objVal;
    end

    % termination step
    if objVal <= paramsolver.epsilon
        break
    end

    % projection onto the set of feasible solutions
    xEst = x_zwisch(1:(length(x_hat)));
    x_hat=xEst + u;
    x_hat(param.mask) = data_gapped(param.mask);

    % computation and storing of SNR and termination function if requested
    if paramsolver.store_snr
        snr_iter(cnt) = snr_n(data_orig(~(param.mask)),  x_hat(~(param.mask)));
    end
    if paramsolver.store_obj
        obj_val(cnt) = objVal;
    end

    % dual variable update
    u = u + xEst - x_hat;

    % iteration counter update
    cnt = cnt+1;

    % incrementation of variable k (require less sparse signal in next iteration)
    if mod(cnt,paramsolver.r) == 0
        k = k + paramsolver.s;
    end

end
end
%end of function
```

Table 7:

| **Algorithm 5:** Basis Optimization |
| --- |
| **Input:** $\left(\eta_{e/o}(A_G x)\right)\|_{\mathcal{N}}$, $\rho_{start}$, $d$, $\varepsilon$, $r_{max}$ <br> **Output:** $\hat{U}$ |
| 1   $U^{(0)} = I_{\tilde{M}}$, $\rho_0 = \rho_{start}$, $r = 0$ <br> 2   $s_0 = \sum_{q \in \mathcal{N}} \left\| U^{(0)} \left(\eta_{e/o}(A_G x)\right)_q \right\|_1$ <br> 3   **while** $\rho_r > \varepsilon$ **and** $r < r_{max}$ **do** <br> 4     $\hat{H}^{(r)} = $ <br>      $\underset{H \in \mathcal{H}_{r,d}}{\arg\min} \sum_{q \in \mathcal{N}} \left\| (I_{\tilde{M}} + iH) U^{(r)} \left(\eta_{e/o}(A_G x)\right)_q \right\|_1$ <br>      $s_{r+1} = \sum_{q \in \mathcal{N}} \left\| e^{i\hat{H}^{(r)}} U^{(r)} \left(\eta_{e/o}(A_G x)\right)_q \right\|_1$ <br> 5     **if** $s_{r+1} < s_r$ **then** <br> 6       $U^{(r+1)} = e^{i\hat{H}^{(r)}} U^{(r)}$,    $\rho_{r+1} = \rho_r$ <br> 7     **else** <br> 8       $U^{(r+1)} = U^{(r)}$,    $s_{r+1} = s_r$,    $\rho_{r+1} = \frac{\rho_r}{2}$ <br> 9     $r \leftarrow r + 1$ <br> 10   **return** $\hat{U} = U^{(r+1)}$ |

Table 8: Matlab-CVX code used for implementing Algorithm 5

```
function [Basis,sparsity_init,sparsity_final] = basis_opt_new(X_tr,level_init,epsilon)
%%    Optimizes Unitary Basis
%%
%%  Copyright: (c) Georg Tauböck, 2006-2010; adapted 2020
%
% Basis         ... orthonormal basis that sparsifies all
%               training signals X_tr; represented by unitary NxN matrix
% sparsity_init ... l1-norm of (all) coefficients using the identity
%                 matrix as sparsifying matrix
% sparsity_final ... l1-norm of (all) coefficients when all training signals are
%               multiplied by orthonormal basis Basis generated by
%               algorithm
% X_tr          ... NxM matrix containing M training signals as vectors
%
%             Goal: Y_tr := U*X_tr should be as sparse as possible: minimize
%             norm(vec(Y_tr),1) over set of all unitary matrices U
%
% epsilon       ... threshold after which algorithm is terminated (if level falls below epsilon)
% level_init    ... start value of level (see epsilon)
%

% initalization

[N,M]=size(X_tr);

I=eye(N);

Aopt=I;
sparsity_old=Inf;
sparsity=norm(vec(X_tr),1);
sparsity_init=sparsity;
```

```
level=level_init;

cnt=1;
cnt_max=20;
off_diags=3;

% cvx_solver sdpt3 % only this solver seems to work

fprintf('Starting basis optimization ...\n');

while level>epsilon
   level_power=log2(level);
   while sparsity < sparsity_old
      Y=Aopt*X_tr;

      cvx_begin quiet
         variable A(N,N) hermitian banded(off_diags,off_diags);
         minimize(norm(vec((I+j*2*pi*A)*Y),1));  % this correspods to an averaged l1-norm over all training signals;
         subject to
            max(max(abs(A))) <= level % this could be replaced by another norm
      cvx_end


      sparsity_old_save=sparsity_old;
      sparsity_old=sparsity;
      Aopt_old=Aopt;
      Aopt=expm(j*2*pi*A)*Aopt;
      sparsity=norm(vec(Aopt*X_tr),1);
      cnt=cnt+1;
      if cnt>cnt_max
         break;
      end
   end
   if cnt>cnt_max
      break;
      end
   level=level/2;
   Aopt=Aopt_old;
   sparsity=sparsity_old;
   sparsity_old=sparsity_old_save;
end
sparsity_final=norm(vec(Aopt*X_tr),1);

Basis=Aopt;

%end of function
```

Table 9: Matlab code of function "hard_thresholding_dgtreal" which is called by the functions
of Table 4 and Table 6

```
function s = hard_thresholding_dgtreal(a, k)

%account for conj-symm extension when thresholding
b=a;
b(1,:)=a(1,:)/sqrt(2);
b(size(a,1),:)=a(size(a,1),:)/sqrt(2);

% sorting them
[d, ind] = sort(abs(b), 1,'descend');
% s = zeros(length(a),1);
s = zeros(size(a));
j= 1;

while j <= size(a,2)
   if k < size(a,1)
      s(ind(1:k,j),j) = a(ind(1:k,j),j);
   else
      s = a;
   end

   j= j+1;
end

end
```

**Claims**

1. Computer-implemented method for signal processing,

   comprising the steps of

   providing an input signal (x) dependent on location within a predetermined signal domain in the form of a plurality of signal values associated with respective locations contained in a containing region within the signal domain, wherein the input signal is a time-dependent acoustic signal or an image signal, and the signal domain is an interval of time or a region defined in a two-dimensional plane, respectively,
   defining a first portion within the containing region, said first portion being referred to as gap, wherein signal values associated with locations in the gap are assumed to be invalid,
   providing a first set of dictionary signals (g) defined on the containing region, said first set being referred to as initial frame and its elements as initial dictionary signals, wherein the initial frame is usable for modeling the signal within the containing region by linear combination of the initial dictionary signals, the computer-implemented method being **characterised by** further comprising the steps of:
   determining a second set of dictionary signals ($\hat{g}$) defined on the containing region, said second set being referred to as deformed frame and its elements as modified dictionary signals, wherein the modified dictionary signals are invertible linear combinations of the initial dictionary signals, namely, linear combinations according to an invertible matrix ($\hat{U}$, $\hat{V}$, $\hat{W}$) referred to as deformation matrix, wherein at least some of the modified dictionary signals are different from all initial dictionary signals,

   wherein the deformation matrix ($\hat{U}$, $\hat{V}$, W) is determined based on the signal values in the containing region outside the gap, by

   calculating analysis coefficients for the input signal with respect to the initial frame, to obtain an analysis coefficient vector (v),

> determining an invertible matrix (U) which optimizes a vector norm of a transformed coefficient vector (Uv) which is the result of transforming the analysis coefficient vector using the matrix, and
> using the invertible matrix (U) thus obtained as the deformation matrix ($\hat{U}$, $\hat{V}$, W), and

reconstructing the signal within the gap from the signal values in the containing region outside the gap by means of a sparse reconstruction method using the deformed frame ($\hat{g}$) or the deformation matrix ($\hat{U}$, $\hat{V}$).

2. The method of claim 1, wherein determining an invertible matrix (U) that optimizes a vector norm of a transformed coefficient vector (Uv) includes using a vector norm which is calculated from the moduli of the components of the respective vector, such as the sum of the moduli of the vector components or, using a segmentation of the vector into a number of sub-vectors, the maximum of the values of the sub-vector norms obtained as the sum of the moduli of the vector components within each sub-vector.

3. The method of any one of the preceding claims, wherein the deformation matrix ($\hat{U}$, $\hat{V}$, $\hat{W}$) is a unitary matrix, and the invertible matrix used in determining a matrix (U) which optimizes a vector norm of a transformed coefficient vector (Uv) is also a unitary matrix.

4. The method of any one of the preceding claims, wherein the initial dictionary signals are signal functions localized around respective center locations with an associated window length.

5. The method of any one of the preceding claims, wherein calculating analysis coefficients for the input signal with respect to the initial frame includes: excluding the signal values which are associated with locations within the gap, wherein excluding the signal values is implemented by one of skipping the respective signal values or by setting the respective signal values to zero, wherein preferably also signal values associated with locations in a margin region around the gap are excluded, wherein the margin region comprises guard intervals at the boundaries of the gap, the guard intervals having a width selected from the range of [0.25, 2] times the window length of the initial dictionary signals.

6. The method of any one of the preceding claims, wherein calculating analysis coefficients for the input signal with respect to the initial frame includes: excluding analysis coefficients which correspond to initial dictionary signals which would contain contributions from signal values associated with locations in the gap, wherein preferably also analysis coefficients associated with locations in a margin region around the gap are excluded, wherein the margin region comprises guard intervals at the boundaries of the gap, the guard intervals having a width selected from the range of [0.25, 2] times the window length of the initial dictionary signals.

7. The method of any one of the preceding claims, wherein the initial frame is decomposable into a number of cohorts, each cohort containing a plurality of dictionary signals and the cohorts being mutually disjoint, and the linear transformation according to said invertible matrix ($\hat{U}$) operates on the initial frame in a manner preserving the cohort structure, where the linear combinations only operate within each of the cohorts, and the linear transformation operates on the number of cohorts in a manner mutually equivalent between cohorts.

8. The method of claim 7, wherein the initial dictionary signals are arranged according to a matrix wherein the cohorts correspond to columns, and the linear transformation is realized as a matrix operating on the matrix of the initial dictionary signals by matrix multiplication from the left.

9. The method of claim 7 or 8, wherein each cohort is associated with a respective location in the signal domain, and the initial dictionary signals of the cohort are signal functions localized around said respective location.

10. The method of any one of the preceding claims, wherein determining an invertible matrix ($\hat{U}$, $\hat{V}$, $\hat{W}$) which optimizes a vector norm of a transformed coefficient vector (Ux) which is the result of transforming the analysis coefficient vector using the matrix is done using an iterative method comprising the steps of

(a) initializing the matrix (U) with an identity matrix (I), and initializing a matrix level value (p) with a predefined initial value,
(b) determining the transformed coefficient vector (Uv) by transforming the analysis coefficient vector using the matrix and taking the vector norm of the transformed coefficient vector,
(c) determining an updating matrix ($e^{iH}$) as the exponential of a Hermitian matrix (H) such that the updating matrix minimizes the vector norm of a result vector ($e^{iH}$Uv) obtained by transforming the transformed coefficient vector

(Uv) with the updating matrix (e$^{iH}$) or a Taylor expansion thereof (I+iH) with respect to the Hermitian matrix (H) under the constraint that all entries in the Hermitian matrix (H) are smaller than the matrix level value (p),
(d) updating the matrix (U) by multiplication with the updating matrix (e$^{iH}$) if the vector norm obtained in step (c) is decreased with respect to the vector norm obtained in step (b), or otherwise decreasing the matrix level value (p) by a predetermined factor smaller than 1, and repeating steps (b) to (d) until the matrix level value falls below a predetermined lower limit value or a maximum number of iterations is reached.

11. The method of claim 10, wherein in step (c)

the Hermitian matrix (H) has at most d non-vanishing off-diagonals, where d is a predetermined positive integer, preferably 3 or 5, and/or
the Taylor expansion is realized as a first-order Taylor expansion.

12. The method of any one of the preceding claims, wherein the step of defining the gap is done based on the signal values, wherein signal values are determined as unreliable based on a predetermined criterion, preferably at least one of the criteria:

- where a signal value lies out of a predefined acceptable range;
- where a signal value is associated with a region in the signal domain, wherein within said region the signal values are essentially constant; and/or
- where a signal value is associated with an error occurring during a previous transmission procedure of the signal.

13. A computer program product, containing computer program code instructions which, when executed on a computer, enables execution of the method of any one of the preceding claims.


**Patentansprüche**

1. Computerimplementiertes Verfahren zur Verarbeitung eines Signals,

umfassend die Schritte:

Liefern eines Eingangssignals (x), das von der Position innerhalb einer vorbestimmten Signaldomäne abhängig ist, in Form einer Vielzahl von Signalwerten, die jeweils einer Position in einem Trägerbereich innerhalb der Signaldomäne zugeordnet sind, wobei das Eingangssignal ein zeitabhängiges akustisches Signal oder ein Bildsignal ist und die Signaldomäne ein Zeitintervall bzw. ein in einer zweidimensionalen Ebene definierter Bereich ist,
Festlegen eines ersten Teilbereichs, als "Lücke" bezeichnet, in dem Trägerbereich, wobei Signalwerte, die Positionen in der Lücke zugeordnet sind, als ungültig angenommen werden,
Bereitstellen eines ersten Satzes von Katalogsignalen (g), die auf dem Trägerbereich definiert sind, der erste Satz bezeichnet als "Ausgangsrahmen" und seine Elemente als "Ausgangskatalogsignale", wobei der Ausgangsrahmen zum Modellieren des Signals innerhalb des Trägerbereichs durch lineare Kombination der Ausgangskatalogsignale verwendbar ist,

wobei das computerimplementierte Verfahren **dadurch gekennzeichnet ist, dass** es ferner die Schritte umfasst:

Bestimmen eines zweiten Satzes von Katalogsignalen (ĝ), die auf dem Trägerbereich definiert sind, der zweite Satz bezeichnet als "deformierter Rahmen" und seine Elemente als "modifizierte Katalogsignale", wobei die modifizierten Katalogsignale invertierbare Linearkombinationen der Ausgangskatalogsignale sind, nämlich, Linearkombinationen gemäß einer invertierbaren Matrix (Û, V̂, Ŵ), bezeichnet als "Deformationsmatrix", wobei sich zumindest einige der modifizierten Katalogsignale von sämtlichen Ausgangskatalogsignalen unterscheiden, wobei die Deformationsmatrix (Û, V̂, Ŵ) auf Grundlage der Signalwerte in dem Trägerbereich außerhalb der Lücke bestimmt wird, durch

Berechnen von Analysiskoeffizienten für das Eingangssignal in Bezug auf den Ausgangsrahmen zum Gewinnen eines Analysiskoeffizientenvektors (v),
Bestimmen einer invertierbaren Matrix (U), die eine Vektornorm eines transformierten Koeffizientenvektors (Uv) optimiert, der sich aus dem Transformieren des Analysiskoeffizientenvektors unter Verwendung der Matrix ergibt, und

Verwenden der so gewonnenen invertierbaren Matrix (U) als Deformationsmatrix ($\hat{U}$, $\hat{V}$, $\hat{W}$), und

Rekonstruieren des Signals in der Lücke ausgehend von den Signalwerten im Trägerbereich außerhalb der Lücke mithilfe eines Verfahren zur Sparse-Rekonstruktion unter Verwendung des deformierten Rahmens ($\hat{g}$) oder der Deformationsmatrix ($\hat{U}$, $\hat{V}$).

2. Verfahren nach Anspruch 1, wobei das Bestimmen einer invertierbaren Matrix (U), die eine Vektornorm eines transformierten Koeffizientenvektors (Uv) optimiert, die Verwendung einer Vektornorm beinhaltet, die aus den Beträgen der Komponenten des jeweiligen Vektors berechnet wird, wie z.B. die Summe der Beträge der Vektorkomponenten oder, unter Verwendung einer Segmentierung des Vektors in eine Anzahl von Untervektoren, das Maximum der Werte der Normen der Untervektoren, ermittelt als Summe der Beträge der Vektorkomponenten innerhalb jedes Untervektors.

3. Verfahren nach einem der vorhergehenden Ansprüche, wobei die Deformationsmatrix ($\hat{U}$, $\hat{V}$, $\hat{W}$) eine unitäre Matrix ist und die invertierbare Matrix, die beim Bestimmen einer Matrix (U), die eine Vektornorm eines transformierten Koeffizientenvektors (Uv) optimiert, verwendet wird, ebenfalls eine unitäre Matrix ist.

4. Verfahren nach einem der vorhergehenden Ansprüche, wobei die Ausgangskatalogsignale um jeweilige Mittelpositionen lokalisierte Signalfunktionen mit einer zugeordneten Fensterlänge sind.

5. Verfahren nach einem der vorhergehenden Ansprüche, wobei das Berechnen von Analysiskoeffizienten für das Eingangssignal in Bezug auf den Ausgangsrahmen umfasst: Ausschließen der Signalwerte, die Positionen innerhalb der Lücke zugeordnet sind, wobei das Ausschließen der Signalwerte dadurch implementiert wird, dass entweder die jeweiligen Signalwerte übersprungen oder die jeweiligen Signalwerte auf Null gesetzt werden, wobei vorzugsweise auch Signalwerte, die Stellen in einem Randbereich um die Lücke herum zugeordnet sind, ausgeschlossen werden, wobei der Randbereich Schutzintervalle an den Rändern der Lücke aufweist, wobei die Schutzintervalle eine Breite ausgewählt aus dem Bereich von [0,25, 2] mal der Fensterlänge der Ausgangskatalogsignale haben.

6. Verfahren nach einem der vorhergehenden Ansprüche, wobei das Berechnen von Analysiskoeffizienten für das Eingangssignal in Bezug auf den Ausgangsrahmen umfasst: Ausschließen von Analysiskoeffizienten, die Ausgangskatalogsignalen entsprechen, die Beiträge von Positionen in der Lücke zugeordneten Signalwerten enthalten würden, wobei vorzugsweise auch Analysiskoeffizienten ausgeschlossen werden, die Positionen in einem Randbereich um die Lücke zugeordnet sind, wobei der Randbereich Schutzintervalle an den Rändern der Lücke aufweist, wobei die Schutzintervalle eine Breite ausgewählt aus dem Bereich von [0,25, 2] mal der Fensterlänge der Ausgangskatalogsignale haben.

7. Verfahren nach einem der vorhergehenden Ansprüche, bei dem das Ausgangsbild in eine Anzahl von Kohorten zerlegbar ist, wobei jede Kohorte eine Vielzahl von Katalogsignalen enthält und die Kohorten zueinander disjunkt sind, und die lineare Transformation gemäß der invertierbaren Matrix ($\hat{U}$) auf das Ausgangsbild in einer die Kohortenstruktur bewahrenden Weise operiert, wobei die Linearkombinationen nur innerhalb jeder der Kohorten operieren und die lineare Transformation auf die Anzahl von Kohorten in für die Kohorten gleichartiger Weise operiert.

8. Verfahren nach Anspruch 7, wobei die Ausgangskatalogsignale gemäß einer Matrix angeordnet sind, worin die Kohorten Spalten entsprechen, und die lineare Transformation als eine Matrix ausgeführt wird, die auf die Matrix der Ausgangskatalogsignale durch Matrixmultiplikation von links wirkt.

9. Verfahren nach Anspruch 7 oder 8, wobei jede Kohorte jeweils einer Position in der Signaldomäne zugeordnet ist und die Ausgangskatalogsignale der Kohorte Signalfunktionen sind, die um die jeweilige Position lokalisiert sind.

10. Verfahren nach einem der vorhergehenden Ansprüche, wobei das Bestimmen einer invertierbaren Matrix ($\hat{U}$, $\hat{V}$, $\hat{W}$), die eine Vektornorm eines transformierten Koeffizientenvektors (Ux) optimiert, der der sich aus dem Transformieren des Analysiskoeffizientenvektors unter Verwendung der Matrix ergibt, mittels eines iterativen Verfahrens erfolgt mit den Schritten

(a) Initialisieren der Matrix (U) mit einer Identitätsmatrix (I) und Initialisieren eines Matrixpegelwertes (p) mit einem vordefinierten Ausgangswert,

(b) Bestimmen des transformierten Koeffizientenvektors (Uv) durch Transformieren des Analysiskoeffizientenvektors unter Verwendung der Matrix und Bestimmen der Vektornorm des transformierten Koeffizientenvektors,

(c) Bestimmen einer Updatematrix ($e^{iH}$) als Exponential einer hermiteschen Matrix (H), so dass die Updatematrix die Vektornorm eines Ergebnisvektors ($e^{iH}Uv$) minimiert, der durch Transformieren des transformierten Koeffizientenvektors (Uv) mit der Updatematrix ($e^{iH}$) oder einer Taylor-Entwicklung davon (I+iH) in Bezug auf die hermitesche Matrix (H) unter der Bedingung erhalten wird, dass alle Einträge in der hermiteschen Matrix (H) kleiner als der Matrixpegelwert (p) sind,

(d) Nachführen der Matrix (U) durch Multiplikation mit der Updatematrix ($e^{iH}$), wenn die in Schritt (c) erhaltene Vektornorm in Bezug auf die in Schritt (b) erhaltene Vektornorm verringert wird, oder andernfalls Verringern des Matrixpegelwerts (p) um einen vorbestimmten Faktor kleiner als 1,

und Wiederholen der Schritte (b) bis (d), bis der Matrixpegelwert unter einen vorbestimmten unteren Grenzwert fällt oder eine Höchstzahl von Iterationen erreicht ist.

11. Verfahren nach Anspruch 10, wobei in Schritt (c)

die hermitesche Matrix (H) höchstens d nicht verschwindende Elemente außerhalb der Diagonalen hat, wobei d eine vorbestimmte positive ganze Zahl ist, vorzugsweise 3 oder 5, und/oder die Taylor-Entwicklung als Taylor-Entwicklung erster Ordnung durchgeführt wird.

12. Verfahren nach einem der vorhergehenden Ansprüche, wobei der Schritt des Definierens der Lücke aufgrund der Signalwerte erfolgt, wobei Signalwerte aufgrund eines vorbestimmten Kriteriums als unzuverlässig bestimmt werden, vorzugsweise zumindest eines folgender Kriterien:

- wo ein Signalwert außerhalb eines vordefinierten akzeptablen Bereichs liegt;
- wo ein Signalwert einem Bereich in der Signaldomäne zugeordnet ist, wobei innerhalb dieses Bereichs die Signalwerte im Wesentlichen konstant sind; und/oder
- wo ein Signalwert mit einem Fehler verbunden ist, der während eines vorangehenden Übertragungsvorgangs des Signals aufgetreten ist.

13. Computerprogrammprodukt, das Computerprogrammcodebefehle enthält, die bei Ausführung auf einem Computer das Ausführen des Verfahrens nach einem der vorhergehenden Ansprüche ermöglichen.

**Revendications**

1. Procédé mis en œuvre par ordinateur pour le traitement des signaux,

comprenant les étapes suivantes :

fournir un signal d'entrée (x) dépendant de l'emplacement dans un domaine de signal prédéterminé sous la forme d'une pluralité de valeurs de signal associées à des emplacements respectifs contenus dans une région conteneur dans le domaine de signal, le signal d'entrée étant un signal acoustique dépendant du temps ou un signal d'image, et le domaine de signal étant un intervalle de temps ou une région définie dans un plan à deux dimensions, respectivement,

définir une première partie dans ladite région conteneur, ladite première partie dit lacune, les valeurs de signal associées à des emplacements dans la lacune étant supposées être invalides,

fournir un premier ensemble de signaux de dictionnaire (g) définis sur la région conteneur, ledit premier ensemble dit cadre initial et ses éléments dits signaux de dictionnaire initiaux, le cadre initial étant utilisable pour modéliser le signal dans la région conteneur par une combinaison linéaire des signaux de dictionnaire initiaux,

le procédé mis en œuvre par ordinateur étant **caractérisée par le fait qu'**elle comprend en outre les étapes de : déterminer un deuxième ensemble de signaux de dictionnaire (ĝ) définis sur la région conteneur, ledit deuxième ensemble dit cadre déformé et ses éléments dits signaux de dictionnaire modifiés, les signaux de dictionnaire modifiés étant des combinaisons linéaires inversables des signaux de dictionnaire initiaux, à savoir des combinaisons linéaires selon une matrice inversable (Û, V̂, Ŵ) dite matrice de déformation, au moins quelques des signaux de dictionnaire modifiés étant différents de tous les signaux de dictionnaire initiaux,
la matrice de déformation (Û, V̂, Ŵ) étant déterminée sur la base des valeurs de signal dans la région conteneur à l'extérieur de la lacune, en

calculant des coefficients d'analyse pour le signal d'entrée par rapport au cadre initial, afin d'obtenir un vecteur de coefficient d'analyse (v),
déterminant une matrice inversible (U) qui optimise une norme vectorielle d'un vecteur de coefficient transformé (Uv) qui est le résultat de la transformation du vecteur de coefficient d'analyse à l'aide de la matrice, et
utilisant la matrice inversible (U) ainsi obtenue comme matrice de déformation (Û, V̂, Ŵ),
et

reconstruir le signal à l'intérieur de la lacune à partir des valeurs du signal dans la région conteneur à l'extérieur de la lacune au moyen d'une méthode de reconstruction éparse utilisant le cadre déformé (ĝ) ou la matrice de déformation (Û, V̂).

2. Procédé de la revendication 1, dans lequel la détermination d'une matrice inversible (U) qui optimise une norme vectorielle d'un vecteur de coefficient transformé (Uv) comprend l'utilisation d'une norme vectorielle calculée à partir des valeurs absolues des composantes du vecteur respectif, telle que la somme des valeurs absolues des composantes du vecteur ou, en utilisant une segmentation du vecteur en un certain nombre de sous-vecteurs, le maximum des valeurs des normes des sous-vecteurs obtenues comme la somme des valeurs absolues des composantes du vecteur à l'intérieur de chaque sous-vecteur.

3. Procédé de l'une quelconque des revendications précédentes, dans lequel la matrice de déformation (Û, V̂, Ŵ) est une matrice unitaire, et la matrice inversible utilisée pour déterminer une matrice (U) qui optimise une norme vectorielle d'un vecteur de coefficient transformé (Uv) est également une matrice unitaire.

4. Procédé de l'une quelconque des revendications précédentes, dans lequel les signaux initiaux du dictionnaire sont des fonctions de signal localisées autour d'emplacements centraux respectifs avec une longueur de fenêtre associée.

5. Procédé de l'une quelconque des revendications précédentes, dans lequel le calcul des coefficients d'analyse pour le signal d'entrée par rapport au cadre initial comprend : l'exclusion des valeurs de signal qui sont associées à des emplacements dans la lacune, l'exclusion des valeurs de signal étant mise en œuvre en sautant les valeurs de signal respectives ou en mettant les valeurs de signal respectives à zéro ; de préférence les valeurs de signal associées à des emplacements dans une région marginale autour de la lacune étant également exclues, la région marginale comportant des intervalles de garde aux limites de la lacune, les intervalles de garde ayant une largeur choisie dans l'intervalle de [0,25, 2] fois la longueur de la fenêtre des signaux du dictionnaire initial.

6. Procédé de l'une quelconque des revendications précédentes, dans lequel le calcul des coefficients d'analyse pour le signal d'entrée par rapport au cadre initial comprend : l'exclusion des coefficients d'analyse qui correspondent aux signaux du dictionnaire initial qui contiendraient des contributions de valeurs de signal associées à des emplacements dans la lacune ; de préférence également les coefficients d'analyse associés à des emplacements dans une région marginale autour de la lacune étant exclus, la région marginale comportant des intervalles de garde aux limites de la lacune, les intervalles de garde ayant une largeur choisie dans la plage de [0,25, 2] fois la longueur de la fenêtre des signaux du dictionnaire initial.

7. Procédé de l'une quelconque des revendications précédentes, dans lequel le cadre initial est décomposable en un certain nombre de cohortes, chaque cohorte contenant une pluralité de signaux de dictionnaire et les cohortes étant mutuellement disjointes, et la transformation linéaire selon ladite matrice inversible (Û) opère sur le cadre initial d'une manière qui préserve la structure des cohortes, où les combinaisons linéaires n'opèrent que dans chacune des cohortes, et la transformation linéaire opère sur le nombre de cohortes d'une manière mutuellement équivalente entre les cohortes.

8. Procédé de la revendication 7, dans lequel les signaux du dictionnaire initial sont disposés selon une matrice dans laquelle les cohortes correspondent aux colonnes, et la transformation linéaire est réalisée comme une matrice opérant sur la matrice des signaux du dictionnaire initial par multiplication matricielle à partir de la gauche.

9. Procédé de la revendication 7 ou 8, dans lequel chaque cohorte est associée à un emplacement respectif dans le domaine du signal, et les signaux du dictionnaire initial de la cohorte sont des fonctions de signal localisées autour dudit emplacement respectif.

10. Procédé de l'une quelconque des revendications précédentes, dans lequel la détermination d'une matrice inversible (Û, V̂, Ŵ) qui optimise une norme vectorielle d'un vecteur de coefficient transformé (Ux) qui est le résultat de la transformation du vecteur de coefficient d'analyse à l'aide de la matrice est effectuée à l'aide d'une procédure itérative comprenant les étapes de

  (a) initialisation de la matrice (U) avec une matrice d'identité (I), et initialisation d'une valeur de niveau de matrice (p) avec une valeur initiale prédéfinie,
  (b) déterminer le vecteur de coefficient transformé (Uv) en transformant le vecteur de coefficient d'analyse à l'aide de la matrice et en déterminant la norme vectorielle du vecteur de coefficient transformé,
  (c) déterminer une matrice d'actualisation ($e^{iH}$) en tant qu'exponentielle d'une matrice hermitienne (H) de sorte que la matrice d'actualisation minimise la norme vectorielle d'un vecteur de résultat ($e^{iH}Uv$) obtenu en transformant le vecteur de coefficient transformé (Uv) avec la matrice d'actualisation ($e^{iH}$) ou une expansion de Taylor de celle-ci (I+iH) par rapport à la matrice hermitienne (H) sous la contrainte que toutes les entrées de la matrice hermitienne (H) sont inférieures à la valeur de niveau de la matrice (p),
  (d) réviser la matrice (U) par multiplication avec la matrice d'actualisation ($e^{iH}$) si la norme vectorielle obtenue à l'étape (c) est diminuée par rapport à la norme vectorielle obtenue à l'étape (b), ou sinon diminution de la valeur de niveau de la matrice (p) d'un facteur prédéterminé inférieur à 1,

  et par répétition des étapes (b) à (d) jusqu'à ce que la valeur de niveau de la matrice tombe en dessous d'une valeur limite inférieure prédéterminée ou qu'un nombre maximal d'itérations soit atteint.

11. Procédé de la revendication 10, dans lequel à l'étape (c)

  la matrice hermitienne (H) a au plus d éléments non fluctuantes en dehors de la diagonale, d étant un nombre entier positif prédéterminé, de préférence 3 ou 5, et/ou
  l'expansion de Taylor étant réalisée en tant qu'expansion de Taylor du premier ordre.

12. Procédé de l'une quelconque des revendications précédentes, dans lequel l'étape de définir la lacune est effectuée sur la base des valeurs de signal, les valeurs de signal étant déterminées comme non fiables sur la base d'un critère prédéterminé, de préférence au moins l'un des critères suivants :

  - une valeur de signal se situe en dehors d'une plage acceptable prédéfinie ;
  - une valeur de signal est associée à une région du domaine du signal, dans laquelle les valeurs de signal sont essentiellement constantes ; et/ou
  - une valeur de signal est associée à une erreur survenue au cours d'une procédure de transmission antérieure du signal.

13. Produit de programme d'ordinateur, contenant des instructions de code de programme d'ordinateur qui, lorsqu'elles sont exécutées sur un ordinateur, permettent l'exécution de la procédé de l'une quelconque des revendications précédentes.

Fig. 1

Fig. 2a

Fig. 2b

Fig. 2c

Fig. 2d

Fig. 3a

Fig. 3b

Fig. 3c

Fig. 3d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **A. ADLER** ; **V. EMIYA** ; **M. JAFARI** ; **M. ELAD** ; **R. GRIBONVAL** ; **M. PLUMBLEY**. Audio inpainting. *IEEE Trans. Audio, Speech, and Language Processing*, March 2012, vol. 20 (3), 922-932
- **C. PERKINS** ; **O. HODSON** ; **V. HARDMAN**. A survey of packet loss recovery techniques for streaming audio. *IEEE network*, 1998, vol. 12 (5), 40-48
- Digital audio restoration. **S. GODSILL** ; **P. RAYNER** ; **O. CAPPÉ**. Applications of digital signal processing to audio and acoustics.. Springer, 2002, 133-194
- **A. JANSSEN** ; **R. VELDHUIS** ; **L. VRIES**. Adaptive interpolation of discrete-time signals that can be modeled as autoregressive processes. *IEEE Trans. Ac., Sp., Sign. Proc.*, 1986, vol. 34 (2), 317-330
- **L. OUDRE**. Interpolation of missing samples in sound signals based on autoregressive modeling. *Image Processing On Line*, 2018, vol. 8, 329-344
- **W. ETTER**. Restoration of a discrete-time signal segment by interpolation based on the left-sided and right-sided autoregressive parameters. *IEEE Trans. Signal Process.*, May 1996, vol. 44 (5), 1124-1135
- **P. A. ESQUEF** ; **V. VÄLIMÄKI** ; **K. ROTH** ; **I. KAUPPINEN**. Interpolation of long gaps in audio signals using the warped burgs method. *Proc. 6th Int. Conf. on Digital Audio Effects (DAFx-03)*, 2003, 08-11
- **I. KAUPPINEN** ; **K. ROTH**. Audio signal extrapolation-theory and applications. *Proc. DAFx*, 2002, 105-110
- **I. KAUPPINEN** ; **J. KAUPPINEN**. Reconstruction method for missing or damaged long portions in audio signal. *Journal of the Audio Engineering Society*, 2002, vol. 50 (7/8), 594-602
- **D. L. DONOHO** ; **P. B. STARK**. Uncertainty principles and signal recovery. *SIAM J. Appl. Math.*, June 1989, vol. 49 (3), 906-931
- **D. L. DONOHO**. Compressed sensing. *IEEE Trans. Inf. Theory*, April 2006, vol. 52 (4), 1289-1306
- **E. J. CANDÈS** ; **J. ROMBERG** ; **T. TAO**. Stable signal recovery from incomplete and inaccurate measurements. *Communications on Pure and Applied Mathematics*, August 2006, vol. 59 (8), 1207-1223
- **P. BALAZS** ; **M. DOERFLER** ; **M. KOWALSKI** ; **B. TORRESANI**. Adapted and adaptive linear time-frequency representations: a synthesis point of view. *IEEE Sig. Proc. Mag.*, 2013, vol. 30 (6), 20-31
- A Mathematical Introduction to Compressive Sensing. **S. FOUCART** ; **H. RAUHUT**. ser. Applied and Numerical Harmonic Analysis. Birkhäuser, 2013, 1-44
- **F. LIEB** ; **H.-G. STARK**. Audio inpainting: Evaluation of time-frequency representations and structured sparsity approaches. *Signal Processing*, 2018, vol. 153, 291-299
- Introducing SPAIN (SParse Audio INpainter). **O. MOKRY** ; **P. ZÁVIŠKA** ; **P. RAJMIC** ; **V. VESEL'Y**. 2019 27th European Signal Processing Conference (EUSIPCO).. IEEE, 2019, 1-5
- **O. MOKRY** ; **P. RAJMIC**. Audio inpainting: Revisited and reweighted. *arXiv preprint arXiv:2001.02480,*, 2020
- **M. LAGRANGE** ; **S. MARCHAND** ; **J.-B. RAULT**. Long interpolation of audio signals using linear prediction in sinusoidal modeling. *Journal of the Audio Engineering Society*, 2005, vol. 53 (10), 891-905
- Packet loss concealment based on sinusoidal modeling. **J. LINDBLOM** ; **P. HEDELIN**. Speech Coding, 2002, IEEE Workshop Proceedings.. IEEE, 2002, 65-67
- **Y. BAHAT** ; **Y. Y. SCHECHNER** ; **M. ELAD**. Self-content-based audio inpainting. *Signal Processing*, 2015, vol. 111, 61-72
- **N. PERRAUDIN** ; **N. HOLIGHAUS** ; **P. MAJDAK** ; **P. BALAZS**. Inpainting of long audio segments with similarity graphs. *IEEE/ACM Transactions on Audio, Speech, and Language Processing*, 2018, vol. 26 (6), 1083-1094
- **A. MARAFIOTI** ; **N. PERRAUDIN** ; **N. HOLIGHAUS** ; **P. MAJDAK**. A context encoder for audio inpainting. *IEEE/ACM Transactions on Audio, Speech, and Language Processing*, 2019, vol. 27 (12), 2362-2372
- Audio inpainting of music by means of neural networks. **A. MARAFIOTI** ; **N. HOLIGHAUS** ; **P. MAJDAK** ; **N. PERRAUDIN et al.** Audio Engineering Society Convention. Audio Engineering Society, 2019, vol. 146
- A constrained matching pursuit approach to audio declipping. **A. ADLER** ; **V. EMIYA** ; **M. G. JAFARI** ; **M. ELAD** ; **R. GRIBONVAL** ; **M. D. PLUMBLEY**. 2011 IEEE International Conference on Acoustics, Speech and Signal Processing (ICASSP).. IEEE, 2011, 329-332

- **B. DEFRAENE** ; **N. MANSOUR** ; **S. DE HERTOGH** ; **T. VAN WATERSCHOOT** ; **M. DIEHL** ; **M. MOONEN**. Declipping of audio signals using perceptual compressed sensing. *IEEE Transactions on Audio, Speech, and Language Processing*, 2013, vol. 21 (12), 2627-2637
- Audio declipping with social sparsity. **K. SIEDENBURG** ; **M. KOWALSKI** ; **M. DÖRFLER**. 2014 IEEE International Conference on Acoustics, Speech and Signal Processing (ICASSP).. IEEE, 2014, 1577-1581
- Sparsity and cosparsity for audio declipping: a flexible non-convex approach. **S. KITIĆ** ; **N. BERTIN** ; **R. GRIBONVAL**. Int. Conf. o. Lat. Var. Anal. a. Sign. Sep.. Springer, 2015, 243-250
- **F. R. AVILA** ; **M. P. TCHEOU** ; **L. W. BISCAINHO**. Audio soft declipping based on constrained weighted least squares. *IEEE Signal Processing Letters*, 2017, vol. 24 (9), 1348-1352
- Consistent dictionary learning for signal declipping. **L. RENCKER** ; **F. BACH** ; **W. WANG** ; **M. D. PLUMBLEY**. International Conference on Latent Variable Analysis and Signal Separation. Springer, 2018, 446-455
- **P. RAJMIC** ; **P. ZÁVIŠKA** ; **V. VESEL'Y** ; **O. MOKR'Y**. A new generalized projection and its application to acceleration of audio declipping. *Axioms*, 2019, vol. 8 (3), 105
- **O. CHRISTENSEN et al.** An introduction to frames and Riesz bases. Springer, 2016
- **K. GRÖCHENIG**. Foundations of Time-Frequency Analysis. Birkhäuser, 2001
- **V. MACH** ; **R. OZDOBINSKI**. Optimizing dictionary learning parameters for solving audio inpainting problem. *Int. J. Adv. Telecomm., Electrot., Sign. a. Sys.*, 2013, vol. 2 (1), 39-44
- **C. GUICHAOUA**. Dictionary learning for audio inpainting. *HAL Robotics [cs. RO]. 2012*, 2012
- **M. AHARON** ; **M. ELAD** ; **A. BRUCKSTEIN**. K-SVD: An algorithm for designing overcomplete dictionaries for sparse representation. *IEEE Trans. Signal Process.*, November 2006, vol. 54 (11), 4311-4322
- Method of optimal directions for frame design. **K. ENGAN** ; **S. O. AASE** ; **J. H. HUSOY**. 1999 IEEE International Conference on Acoustics, Speech, and Signal Processing. Proceedings. ICASSP99 (Cat. No. 99CH36258). IEEE, 1999, vol. 5, 2443-2446
- **H. G. FEICHTINGER** ; **T. STROHMER**. Advances in Gabor analysis. Springer Science & Business Media, 2012, 1-9
- **I. DAUBECHIES** ; **A. GROSSMANN** ; **Y. MEYER**. Painless nonorthogonal expansions. *Journal of Mathematical Physics*, 1986, vol. 27 (5), 1271-1283
- **P. BALAZS** ; **M. DÖRFLER** ; **F. JAILLET** ; **N. HOLIGHAUS** ; **G. VELASCO**. Theory, implementation and applications of nonstationary Gabor frames. *Journal of computational and applied mathematics*, 2011, vol. 236 (6), 1481-1496
- **D. L. DONOHO** ; **M. ELAD**. Optimally sparse representation in general (nonorthogonal) dictionaries via $\ell 1$ minimization. *Proceedings of the National Academy of Sciences*, 2003, vol. 100 (5), 2197-2202
- **S. S. CHEN** ; **D. L. DONOHO** ; **M. A. SAUNDERS**. Atomic decomposition by basis pursuit. *SIAM review*, 2001, vol. 43 (1), 129-159
- **R. TIBSHIRANI**. Regression shrinkage and selection via the Lasso. *J. Roy. Statist. Soc.*, 1994, vol. 58, 267-288
- **A. M. BRUCKSTEIN** ; **D. L. DONOHO** ; **M. ELAD**. From sparse solutions of systems of equations to sparse modeling of signals and images. *SIAM review*, 2009, vol. 51 (1), 34-81
- **M. ELAD** ; **P. MILANFAR** ; **R. RUBINSTEIN**. Analysis versus synthesis in signal priors. *Inverse problems*, 2007, vol. 23 (3), 947
- **F. KRAHMER** ; **G. E. PFANDER** ; **P. RASHKOV**. Uncertainty in time-frequency representations on finite abelian groups and applications. *Applied and Computational Harmonic Analysis*, 2008, vol. 25 (2), 209-225
- **L. D. ABREU** ; **M. SPECKBACHER**. Donoho-Logan large sieve principles for modulation and polyanalytic Fock spaces. *arXiv preprint arXiv:1808.02258*, 2018
- **S. BOYD** ; **N. PARIKH** ; **E. CHU** ; **B. PELEATO** ; **J. ECKSTEIN et al.** Distributed optimization and statistical learning via the alternating direction method of multipliers. *Foundations and Trends in Machine learning*, 2011, vol. 3 (1), 1-122
- **P. L. SØNDERGAARD** ; **B. TORRÉSANI** ; **P. BALAZS**. The linear time frequency analysis toolbox. *Int. J. Wavel., Multires. a. Inf. Process.*, 2012, vol. 10 (04), 1250032
- The Large Time-Frequency Analysis Toolbox 2.0. **Z. PR@ŠA** ; **P. L. SØNDERGAARD** ; **N. HOLIGHAUS** ; **C. WIESMEYR** ; **P. BALAZS**. Sound, Music, and Motion. Springer International Publishing, 2014, 419-442
- **P. ZÁVIŠKA** ; **O. MOKR'Y** ; **P. RAJMIC**. S-SPADE done right: Detailed study of the sparse audio declipper algorithms. *arXiv preprint arXiv:1809.09847*, 2018
- **G. TAUBÖCK** ; **F. HLAWATSCH**. Compressed sensing based estimation of doubly selective channels using a sparsity-optimized basis expansion. *2008 16th European Signal Processing Conference, Lausanne, Switzerland*, August 2008

- **G. TAUBÖCK** ; **F. HLAWATSCH** ; **D. EIWEN** ; **H. RAUHUT**. Compressive estimation of doubly selective channels in multicarrier systems: Leakage effects and sparsity-enhancing processing. *IEEE J. Sel. Topics Signal Process.*, April 2010, vol. 4 (2), 255-271
- **G. H. GOLUB** ; **C. F. VAN LOAN**. Matrix Computations. Johns Hopkins University Press, 1996, 572-578
- **S. BOYD** ; **L. VANDENBERGHE**. Convex Optimization. Cambridge university press, December 2004

- *CVX: A system for disciplined convex programming*, 13 June 2020, https://github.com/cvxr/CVX
- *LTFAT: The Large Time-Frequency Analysis Toolbox*, 13 June 2020, https://ltfat.github.io
- **R. HUBER** ; **B. KOLLMEIER**. PEMO-Q-A new method for objective audio quality assessment using a model of auditory perception. *IEEE Transactions on Audio, Speech, and Language Processing*, 2006, vol. 14 (6), 1902-1911
- *EBU SQAM CD: Sound quality assessment material recordings for subjective tests*, 13 June 2020, https://tech.ebu.ch/publications/sqamcd